(19) Europäisches Patentamt
European Patent Office
Office européen des brevets

(11) **EP 4 219 567 A1**

(12) **EUROPÄISCHE PATENTANMELDUNG**

(43) Veröffentlichungstag:
**02.08.2023   Patentblatt 2023/31**

(21) Anmeldenummer: **22154311.9**

(22) Anmeldetag: **31.01.2022**

(51) Internationale Patentklassifikation (IPC):
$C08B\ 1/00$ (2006.01)      $C08L\ 1/02$ (2006.01)
$C08J\ 3/09$ (2006.01)      $D01D\ 1/02$ (2006.01)
$D01F\ 2/00$ (2006.01)      $B01F\ 21/00$ (2022.01)
$B01F\ 27/00$ (2022.01)

(52) Gemeinsame Patentklassifikation (CPC):
**D01F 2/00; B01F 27/707; B01F 33/821; C08J 3/096; C08L 1/02; D01D 1/02;** C08J 2301/02

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **LIST Technology AG**
**4422 Arisdorf (CH)**

(72) Erfinder: **STÜTZLE, Bernhard**
**68400 Riedisheim (FR)**

(74) Vertreter: **Patentanwälte und Rechtsanwalt Weiß, Arat & Partner mbB**
**Zeppelinstraße 4**
**78234 Engen (DE)**

(54) **ANLAGE UND VERFAHREN ZUR VERARBEITUNG EINES AUSGANGSMATERIALS ZU EINER FORMLÖSUNG NACH DEM TROCKENLÖSEVERFAHREN**

(57)   Die Erfindung betrifft ein Verfahren zur Herstellung einer Formlösung aus einem Ausgangsmaterial bestehend aus Zellulose, Wasser und einem Funktionsmedium nach dem Trockenlöseverfahren, wobei das Ausgangsmaterial zunächst einem Hochscheraggregat zugeführt wird, wobei in dem Hochscheraggregat aus dem Ausgangsmaterial ein Transfergemisch entsteht und das Transfergemisch anschliessend einem Mischkneter zum Lösen zugeführt wird.

Fig. 1

**Beschreibung**

**Technisches Gebiet**

Die Erfindung betrifft ein Verfahren nach Anspruch 1 und eine Anlage nach Anspruch 11 zur Verarbeitung eines Ausgangsmaterials zu einer Formlösung nach dem Trockenlöseverfahren.

**Stand der Technik**

In der EP 0 906 455 A1 wird beispielsweise beschrieben, dass in einem Trockenlöseverfahren in einem Doppelschneckenextruder aus fibrillärem Zellulosepulver und flüssigem NMMO eine Formlösung erzeugt wird, die in einem nachfolgenden Speicherbehälter mit Druckregler stabilisiert werden muss.

In der EP 1 191 038 A1 wird ein Trockenlöseverfahren beschrieben, wobei in einem Doppelschneckenextruder aus unterkühltem flüssigen NMMO-Hydrat und Zellulosepulver ein gequollenes Gemisch hergestellt wird, das einem Einschneckenextruder zugeführt wird, um anschliessend in dem Einschneckenextruder gelöst zu werden. Im Einzelnen handelt es sich um die Herstellung eines Ausgangsmaterials, welches durch Schmelzen zu einer Lösung verarbeitet wird.

In der EP 1 144 455 B1 ist ein Verfahren beschrieben zum Vermischen und Homogenisieren von Zellulose und wasserhaltigem NMMO in zwei Scherzonen eines ersten Apparats zu einer homogenen Suspension. Hierbei wird die Menge und der Wassergehalt des NMMO mit dem eventuellen Wassergehalt der Zellulose so abgestimmt, dass der NMMO-Gehalt in der flüssigen Phase der gebildeten Suspension zwischen 70 bis 80 Masse-% liegt. Zudem ist eine schematische Anlage gezeigt bestehend aus einem ersten Apparat für die Herstellung der Suspension und einem mit dem ersten verbundenen zweiten Apparat als Verdampfungsstufe. Mit Hinblick auf die unten beschriebene Erfindung handelt es sich bei der EP 1 144 455 B1 also um die Herstellung einer Suspension mit einem so grossen Wasseranteil, dass die nachfolgende Prozessstufe zum Herstellung einer Spinnlösung durch eine Verdampfung von Wasser geprägt ist.

In der WO 2005/000 945 A1 ist ein Verfahren beschrieben, welches ein Mischen von N-Methylmorpholin-N-oxid (NMMO) - Pulver mit gemahlener Zellulose und ein nachfolgendes Lösen enthält, wobei beide Prozesse in einem einzelnen Doppelschneckenextruder stattfinden.

Die WO 2006/071 101 A1 beschreibt ein Lösen einer Paste in einem Extruder zu einer Formlösung, wobei die Paste in einem vorgehenden Kneter aus einer NMMO-Lösung und gemahlender Zellulose hergestellt wird, wobei die NMMO-Lösung aus NMMO und einem kleinen Anteil aus Zellulosepulver besteht. Die WO 2006/071 101 A1 beschreibt also das Vorschalten eines Kneters vor einen Extruder, damit dieser eine Formlösung herstellen kann.

Alle diese Trockenlöseverfahren verwenden einen Extruder zum Lösen der Zellulose. Sie unterscheiden sich durch verschiedene vorgehende Prozessstufen. Der Grund liegt in der hohen Scherintensität von Extrudern. Trockenlöseverfahren werden aber zurzeit im industriellen Massstab nicht für grosse Kapazitäten verwendet. Der Grund liegt in der limitierten Kapazität von Extrudern. Extruder eignen sich zwar mit ihren im Vergleich zu Mischknetern kleineren Durchmessern D, kleinen Spielen und hohen Drehzahlen der Welle gut für ein Vermischen zweier Pulver (ein gefrorenes Funktionsmedium wie beispielswesie NMMO bei Raumtemperatur und gemahlene Zellulose, wobei das gefrorene Funktionsmedium in Pulverform im Extruder durch Einbringen von Scherenergie schmilzt zu einem flüssigen Funktionsmedium wird), oder eines Zellulose-Pulvers mit einem Funktionsmedium im flüssigen Aggregatszustand, verfügen dadurch aber gleichzeitig im Vergleich zu Mischknetern nur über eine kurze Verweilzeit des Produkts, weil die kleinen Spiele zu signifikant kleineren Prozessvolumina als bei Mischknetern führen, und die hohen Drehzahlen der Wellen das Produkt gleichzeitig - im Gegensatz zu Mischknetern - zwangsfördern und so die Verweilzeit begrenzen. Diese limitierte Verweilzeit wird zudem noch verstärkt durch die sehr hohe mechanische Dissipation pro Prozessvolumen.

Eine ungenügende Verweilzeit (im Sinne kürzer als die für die rührorganspezifische mechanische Einwirkung nötige Lösezeit) bedeutet ungenügende Homogenitäten und Lösezustände der Formlösung, sodass die nachfolgende Formgebung wie bspw. beim Spinnen zu Faserrissen, Spinndüsenverstopfung bzw. zu kurzen Filterstandzeiten führt.

Andererseits steigt mit zunehmender Verweilzeit (um die nötige Lösezeit zu erreichen) oder Drehzahl der Welle (um die nötige mechanische Einwirkung zu erreichen) im Extruder der mechanische Energieeintrag und somit die Gefahr einer wesentlichen Überhitzung des Produkts bzw. der Produktkomponenten, was ein Produkteschädigungs- und Zersetzungsrisiko darstellt, was erhebliche Kosten durch produktschädigungsbedingte Preisreduktion und den Ersatz von - im Fall von NMMO und insbesondere IL sehr teuren - Funktionsmedium nach sich ziehen kann. Zudem kann im austragsseitigen Bereich des Extruders eine Abfuhr von Wärme aus dem Produkt durch Kühlung nötig werden, um eine Überhitzung oder wesentliche Überhitzung zu vermeiden, was einen Energieverlust bedeutet, die Energiekosten erhöht und mit zunehmenden Durchmessern wegen abnehmendem Oberfläche-Prozessvolumen-Verhältnis von Extrudern zunehmend schwieriger wird und letztendlich auch die Baugrösse von sich eignenden Extrudern limitiert.

Im Fall von NMMO als Funktionsmedium ist allen oben erwähnten Verfahren zur Herstellung einer Formlösung auch mit einem Extruder die Explosionsgefahr gemeinsam. Aufgrund des geringen, nicht zusammenhängenden freien Volumens im Prozessraum von Extrudern besteht zudem keine einfache Möglichkeit, Druckaufbau infolge von Zersetzungsprozessen des Funktionsmediums über den gesamten Prozessraum zu überwachen und zu entlasten.

Neben den oben beschriebenen Extrudern sind dem Fachmann auch Mischkneter bekannt. Sie verfügen vorzugsweise über genau eine oder genau zwei Kneterwellen, welche der Durchführung von hochviskosen und krustenbildenden Prozessen dienen, die unter Vakuum, atmosphärisch oder bei Überdruck betrieben werden können und über thermische Austauschflächen beheizt oder gekühlt werden können. Zudem kann die Kneterwelle und deren Wellenaufbauten bei typischerweise vorliegenden Produktviskositäten durch Rotation und daraus resultierender Energiedissipation sehr effektiv das Produkt erwärmen.

Ist genau eine Kneterwelle vorhanden, so liegt ein einwelliger Mischkneter vor, welcher beispielsweise in der CH 674 472 A5 beschrieben ist. Hierbei kämmen Wellenaufbauten der Kneterwelle vorzugsweise im Betrieb mit statischen Aufbauten des Gehäuses, beispielsweise sogenannte Gegenhaken. Sind genau zwei Kneterwellen vorhanden, so liegt ein zweiwelliger Mischkneter vor, der beispielsweise in der DE 41 18 884 A1 beschrieben ist. Die Wellenaufbauten der Kneterwellen kämmen sich im Betrieb vorzugsweise gegenseitig.

Die zumindest eine Kneterwelle umfasst Wellenaufbauten in Form von Scheiben und daran befestigten Barren, wobei die Wellenaufbauten der zumindest einen Kneterwelle eingerichtet sind, um sich im Betrieb mit den Wellenaufbauten einer zweiten Kneterwelle oder mit im Mischkneter vorhandenen stationären Gegenelementen zu kämmen. Mischkneter mit derart kämmenden Elementen sind bekannt und werden als «selbstreinigend» bezeichnet, weil das beschriebene Kämmen etwaige Anhaftungen von den sich kämmenden Elementen ablöst.

Mischkneter verfügen über eine Öffnung zum Prozessraum für den Eintrag des Produkts in den Prozessraum des Mischkneters (auch Eintragsöffnung genannt) und eine weitere Öffnung zum Prozessraum des Mischkneters für den Austrag des Produkts aus dem Prozessraum des Mischkneters (auch Austragsöffnung genannt). Eintrags- und Austragsöffnung sind typischerweise an den - axial gesehen - gegenüberliegenden Bereichen des Mischkneters angeordet. Die Eintragsöffnung kann auch aus mehr als einer Öffnung bestehen, die sich über einen sich axial ertreckenden Teil der Länge des Mischkneters verteilen. Weitere Öffnungen zum Prozessraum des Mischkneters können typischerweise in der oberen Hälfte des Prozessraums angeordnet sein (auch Gasabführöffnung genannt), um sich im Mischkneter freisetzende Gase über separate Öffnungen zum Prozessraum abführen zu können, und die - axial gesehen - typischerweise zwischen Eintrags- und Austragsöffnung angeordnet sind. Verfügt der Mischkneter über einen Dom, dann schliesst der von den Innenseiten des Doms abgegrenzte Raum (auch Domgasraum genannt) direkt an den Gasraum des Prozessraums, und diese beiden bilden einen gemeinsamen Gasraum. Ein Dom ist ein sich vertikal gegen oben erstreckender, schornsteinartiger und direkt auf den Gasabführöffnungen des Mischkneters angeordneter Aufsatz, in dessen oberen Bereich sich typischerweise eine Öffnung für das Abführen von Gasen (auch Brüden genannt) befindet (auch Brüdenöffnung genannt). Ein Teil der inneren Oberflächen des Doms kann auch thermisch beheizt oder gekühlt sein. Mischkneter können auch mit mehr als einem Dom ausgerüstet sein, die dann zusammen auch als Döme bezeichnet werden.

Die oben erwähnten Barren, Gegenhaken und Wellenaufbauten fasst man auch unter der Bezeichnung Knetelemente zusammen.Es gibt mehrere Verfahren zur Herstellung einer Formlösung aus Zellstoff (oder auch Zellulose, wobei der Unterschied zwischen Zellstoff und Zellulose für die Interpretation dieser Patentanmeldung irrelevant ist und die beiden Begriffe austauschbar verwendet werden können). Diese lassen sich unter anderem nach dem für eine Formlösung überschüssigen Wassergehalt im Ausgangsmaterial unterscheiden.

Dem Fachmann ist zusätzlich das Verfahren zur Herstellung einer Formlösung aus Zellstoff nach dem Trockenlöseverfahren bekannt, bei welchem eine ionische Flüssigkeit anstelle von NMMO als Funktionsflüssigkeit verwendet wird. IL (Ionic Liquids) bzw. Ionische Flüssigkeiten bezieht sich auf eine Gruppe organischer Verbindungen, die trotz ihres ionischen Aufbaus einen niedrigen Schmelzpunkt (<100°C) aufweisen und daher auch als geschmolzene Salze bezeichnet werden. Die Verwendung von IL als Funktionsmedium bedeutet also immer eine für das Trockenlöseverfahren geeignete Ausführungsform innerhalb der Gruppe der ionischen Flüssigkeiten.

Dem Fachmann ist bekannt, dass IL typischerweise bei erhöhten Temperaturen zu einer thermischen Zersetzung neigen, sodass Prozesse mit einem erhitzten IL die Temperatur des ILs unterhalb dessen Zersetzungstemperatur gehalten werden muss.

Dem Fachmann ist auch bekannt, dass mit der Reduktion des Wassergehalts eines NMMO-Wasser-Zellulose-Gemischs bei erhöhten Temperaturen eine Zersetzung des NMMO beginnt. Bei Temperaturen von typischerweise oberhalb 140°C besteht mit Reduktion des Wassergehalts zunehmend Explosionsgefahr zum Beispiel durch eine explosionsartige autokatalytische Zersetzung, aus der eine weitere Temperaturerhöhung und somit akute Explosionsgefahr folgt. Je nach Zusammensetzung des Gemischs ist eine Zersetzung auch bereits ab Temperaturen oberhalb von 125°C zu beobachten, da sich die Zersetzungstemperatur durch zum Beispiel Vorhandensein von Reduktionsmittel (wie z.B. Zellulose) und Schwermetallionen (wie z.B. Eisenionen) reduzieren kann.

Dem Fachmann ist ferner im Rahmen der Erfindung als Problem der wesentlichen Überhitzung bezeichnete Umstand bekannt, dass zwecks Vermeidung von Zersetzung des Funktionsmediums, der Führung der Temperatur des Produkts (im Folgenden mit auch Produkttemperatur bezeichnet) grosse Beachtung gewidmet werden muss. Er wählt deshalb einen Prozess, bei welchem sich die angestrebte Produkttemperatur sowie die Gleichgewichtstemperatur unterhalb der Zersetzungstemperatur befinden.

Bei einem Mehrkomponentengemisch, wie es im Falles des Zellulose-Funktionsmedium-Wasser-Gemisches vorliegt, ist jeder Zusammensetzung des Gemisches bei herrschenden Prozessbedingungen (Druck) eine Gleichgewichtstemperatur zugeordnet, bei der das Gemisch zu sieden beginnt. Erfolgt eine Energiezufuhr in das Mehrkomponentengemisch, so verdampft ein Teil der flüchtigen Komponenten (hier Wasser). Gleichzeitig verändert sich die Zusammensetzung des Gemisches, wodurch sich in der Folge auch die Gleichgewichtstemperatur ändert. So erwärmt sich das Gemisch bei Energiezufuhr, während sich seine Zusammensetzung durch Verdampfung flüchtiger Komponenten verändert entlang seiner Gleichgewichtskurve.

Bei NMMO als Funktionsmedium führen bei bestehender Transportlimitierung exotherme Zersetzungsprozesse zudem zu lokalen Materialüberhitzungen (Hotspots), aus denen die Reaktionswärme nicht in ausreichendem Masse abgeführt werden kann. Dies löst in der Folge weitere exotherme Zersetzungsprozesse aus.

Eine wesentliche Überhitzung kann aber auch eine Zersetzung der Zellulose oder des Zellulose-Funktionsmediums-Wassergemischs (bzw. definitionsgemäss des Produkts) betreffen, indem sie bei zu hohen Temperaturen, gegebenenfalls in Verbindung mit - bei erhöhten Viskositäten typischerweise vorherrschenden - erhöhter Schereinwirkung, zu einer Reduktion des Polymerisierungsgrades (dem Fachmann als DP bekannt) der Zellulose führt.

Dem Fachmann ist bekannt, dass Löseprozesse nicht instantan sondern innerhalb eines Zeitraums mit einer Lösegeschwindigkeit ablaufen und eine minimale Lösezeit benötigen. Dem Fachmann ist zudem bekannt, dass Lösegeschwindigkeiten durch verschiedene Faktoren wie beispielsweise die Temperatur beinflusst sind, und dass neben der Temperatur auch die Konzentration des Funktionsmediums und die mechanische Behandlung des Gemisches einen Einfluss auf die Lösegeschwindigkeit ausüben. So können bei gleicher Zusammensetzung und gleicher Temperatur durch unterschiedliche mechanische Behandlung des Materials bei gleicher Behandlungsdauer verschiedene Lösezustände eintreten.

Dem Fachmann sind zudem Verfahren zur Herstellung einer Formlösung aus Zellstoff nach dem Direktlöseverfahren bekannt, deren Ausgangsmaterial über einen so grossen Wasseranteil im Vergleich zum Wasseranteil in der Formlösung verfügt, dass ein wesentlicher Teil des Prozesses und der Vorrichtung durch die Verdampfung von Wasser geprägt ist (Nasslöseverfahren), wie beispielsweise in der WO 1994/006530 A1 beschrieben, wobei NMMO als Funktionsmedium und ein Dünnschichtverdampfer zum Verdampfen von Wasser verwendet wird. Der Nachteil der Nasslöseverfahren ist der hohe Energieaufwand, der durch das Verdampfen von Wasser verursacht wird.

So ist deshalb zusätzlich zum geeigneten Wasseranteil für die Herstellung einer Formlösung auch mechanische Einwirkung auf das Produkt notwendig, welche durch die gezielt gewählte Geometrie eines Mischorgans erzielt wird, und welche über eine gewisse Zeit lang erfolgen muss.

So sind für die Herstellung einer Formlösung auch Verfahren bekannt, welche mehr mechanische Einwirkung auf das Produkt verwenden, welche durch die gezielt gewählte Geometrie eines Mischorgans erzielt wird, und welche jedoch über eine gewisse Zeit lang erfolgen muss.

Als thermische Austauschflächen können nicht abschliessend heiz- oder kühlbare Innenseiten von verfahrenstechnischen Apparaten oder Maschinen wie von Mischkneter-, Extruder- oder Dünnschichtverdampfer-Gehäusen, wie auch von Kneterwelle(n) und Scheiben von Mischknetern ausgestaltet sein.

Scheiben von Kneterwellen von Mischknetern, die als thermische Austauschflächen ausgestaltet sind, verfügen über Bohrungen für elektrische Heizelemente oder über Hohlräume für ein Wärmeträgermedium oder Kühlmedium, wobei letztere über einen Zufluss, der vom Zufluss in der Kneterwelle gespiesen wird, und einen Abfluss, der zum Rückfluss in der Kneterwelle zurückfliesst, verfügen. Die Hohlräume können typischerweise als Doppelwände oder Bohrungen ausgeführt sein und benötigen hierzu grössere Wandstärken und grössere Abmessungen der Wellenaufbauten und wandstärkere Kneterwellen und verursachen hierbei einen deutlich grösseren Herstellungsaufwand im Vergleich zu hohlraumfreien (im Folgenden auch mit heizhohlraumfrei bezeichnet) Scheiben, die typischerweise wegen dem Wegfall von thermischen Austauschflächen kleiner und einfacher gebaut werden können.

Kneter sind dem Fachmann bekannt und beispielsweise in der JP 1994 055267 B2 beschrieben. Sie unterscheiden sich von Extrudern durch ein grösseres, freies Prozess-Volumen und geringere Schereinwirkung und von Mischknetern insbesondere durch das eindimensionale Kämmen und durch die damit verbundene Abwesenheit von Barren, welche zu den Mischknetern typischen Mischwirkung führen. Kneter können kontinuierlich und diskontinuierlich betrieben werden.

Z-Kneter und Sigma-Blade-Mischer sind dem Fachmann bekannt und beispielsweise in der DE 1 058 188 A1 beschrieben. Sie zeichnen sich durch zwei z-förmige oder mehrfach-z-förmige Knetarme aus, die je um eine horizontale, parallel zur Achse des anderen Knetarms angeordnete Achse drehend und ineinandergreifend oder nicht ineinandergreifend in einem grossvolumigen - oft trogartig geformten - Reaktorraum angeordnet sind, und können nur chargenweise betrieben werden. Sie eignen sich durch ihr grosses Volumen und den chargenweisen Betrieb besonders für das Einmischen eines grösseren Feststoffanteils und das Vormischen wie auch in der DE 37 20 325 A1 beschrieben, insbesondere auch, weil durch den chargenweisen Betrieb die Dosierung viel einfacher ist. Sie eignen sich aber wegen der grossen Freiräume sowie der fehlenden kontinuierlichen Fahrweise nicht zum genügend Homogenisieren und Lösen von Zellstoff im industriellen Massstab.

## Aufgabe der Erfindung

Die Aufgabe der vorliegenden Erfindung ist es, die Nachteile aus dem Stand der Technik zu überwinden.

Insbesondere soll eine Anlage und ein Verfahren zur Verarbeitung eines Ausgangsmaterials zu einer Formlösung nach dem Trockenlöseverfahren zur Verarbeitung eines Transfergemischs zu einer Formlösung beschrieben werden, welcher in erster Linie ermöglicht, die Nachteile des Trocken-Löse-Prozesses des Stands der Technik zu überwinden, insbesondere die Produktqualität zu erhöhen und dabei die Kapazitäten erhöhen zu können.

## Lösung der Aufgabe

Zur Lösung der Aufgabe führen die Merkmale nach den Ansprüchen 1 und 13.

Vorteilhafte Ausgestaltungen sind in den Unteransprüchen beschrieben.

Gegenstand der vorliegenden Erfindung ist ein Verfahren und eine Anlage, die unter anderem einen Mischkneter zur Verarbeitung eines Transfergemisches als letzte Prozessstufe eines mindestens zweistufigen Prozesses nach dem Trockenlöseverfahren in einem Mischkneter aufzeigt, wobei allen im Rahmen der Aufgabenstellung genannten Sachverhalten Rechnung getragen wird. Dem Mischkneter ist dabei ein Hochscheraggregat vorgeschaltet.

Dabei ist der Mischkneter derart ausgestaltet, dass er im Vergleich zu Extrudern in der Regel großvolumig ausgeführt ist und dabei längere Verweilzeiten erlaubt relativ zu Verweilzeiten, und eine relativ zu einem Hochscheraggregat niedrigere Schereinwirkung aufweist.

Das Hochscheraggregat zeichnet sich verglichen mit dem Mischkneter durch eine hohe Schereinwirkung und verglichen mit dem Mischkneter kürzere Verweilzeiten aus.

Die Misch-, Knet- und Schereinwirkung in einem Prozessorgan wie insbesondere einem Hochscheraggregat oder einem Mischkneter auf ein Produkt ergibt sich im Wesentlichen aus der Interaktion des Produkts mit den sich infolge Rotation der Welle relativ zu einander bewegenden Elementen im Prozessorgan (auch Misch-Knet-Interaktion genannt) und hängt vom Prozess- und Produktvolumen (Füllgrad), der Gestaltung der Geometrie und Oberflächen der Elemente im Prozessraum, der Rotationsgeschwindigkeit der zumindest einen Welle, sowie der Viskosität und der Verweilzeit des zu verarbeitenden Produkts im Prozessorgan ab.

Im Rahmen der Erfindung wird als Produkt jedweder Ausgangs-, Durchgangs- und Endzustand vom Ausgangsmaterial bis zur Lösung bezeichnet.

Die Schereinwirkung ergibt sich aus der Scherung multipliziert mit der Bearbeitungszeit, während der die Scherung erfolgt.

Eine möglichst hohe Scherung wird einerseits durch eine möglichst grosse Scherfläche, die sich sowohl in Richtung, in welche sich die beiden Scherflächen relativ zu einander bewegen, als auch orthogonal dazu erstrecken kann, erzielt. Zudem steigert auch ein möglichst schmaler Scherspalt die Scherung, nämlich dem sich orthogonal zur Scherfläche gemessenen Abstand zwischen den beiden Scherflächen. Zudem steigert auch eine möglichst hohe Relativgeschwindigkeit der beiden Scherflächen die Scherung als auch ein möglichst hoher Füllgrad von Produkt im Scherspalt.

Ein Hochscheraggregat ist ein Prozessorgan mit mindestens einer Welle, deren Drehzahl - tyischerweise deutlich - über derjenigen von Kneterwellen von Mischknetern liegt, und/oder deren Spiele der Misch- oder Knetelemete zu Wandflächen und den Misch- oder Knetelementen einer zweiten Welle deutlich kleiner sind und/oder deren Scherflächen-zu-Prozessvolumen-Verhältnis deutlich grösser ist als bei Mischknetern und/oder deren Einwirkungszeit - typischerweise durch eine chargenweise anstatt eine kontinulierliche Fahrweise - deutlich länger ist als bei Mischknetern, sodass die aus der Kombination dieser Eigenschaften resultierende Schwereinwirkung deutlich grösser als diejenige von Mischknetern vergleichbaren Prozessvolumens ist. Apparativ kann die hohe Schereinwirkung mit einem Hochdrehzahl-Hochscheraggregat erreicht werden, das sich durch im Vergleich zu Mischknetern kleinvolumigen Prozessraum mit zumindest einer im Vergleich zu Mischknetern schnell drehenden Welle mit im Vergleich zu Mischknetern enge Spaltmassen und im Vergleich zu Mischknetern kurzen Verweilzeiten auszeichnet und wie Mischknetern kontinuierlichen Betrieb. Ein typisches Beispiel eines Hochdrehzahl-Hochscheraggregats ist ein Extruder oder ein Hochdrehzahlmischer. Hochdrehzahlmischer unterscheiden sich dabei von Extrudern dadurch, dass sie die hohe Schereinwirkung durch vergleichsweise höhere Drehzahlen bei niedrigeren Drehmomenten erreichen wie beispielsweise ein Ystral®-Mischer oder Fest-Flüssig-Mischer von IKA® oder ein sogenannter KRIMA® Disperser von Cellwood Machinery®. Hochdrehzahlmischer zeichnen sich gegenüber Extrudern insbesondere über höhere Drehzahlen, kürzere Verweilzeiten und geringere Drehmomente der Welle aus. Apparativ kann eine hohe Schereinwirkung auch durch ein Grossvolumen-Hochscheraggregat erreicht werden, das sich durch im Vergleich zu Mischknetern grosse Scherflächen mit im Vergleich zu Mischknetern vorzugsweise einstellbaren Spaltmassen in einem grossvolumigen Prozessraum mit zumindest einer ähnlich einer Kneterwelle schnell drehenden Welle erreicht erreicht mit frei wählbar langen Verweilzeiten und anders als industriell betriebene Mischkneter durch ausschliesslich chargenweisen Betrieb auszeichnen. Ein typisches Beispiel eines Grossvolumen-Hochscheraggregats ist ein Z-Kneter oder Sigmablade-Mischer. Typische Verweilzeiten von Hochdrehzahlmischern betragen maximal 10 Sekunden, von Extrudern maximal 5 Minuten und von Grossvolumen-Hochscheraggregaten mindestens 15 Minuten.

Eine Platzierung des Mischkneters nach dem Hochscheraggregat im Trockenlöseverfahren und in der Anlage ermöglicht, die technischen Vorzüge des Mischkneters für den Trockenlöseprozess spezfisch zu nutzen. Dabei hat es sich als vorteilhaft herausgestellt, wenn dem Mischkneter das Hochscheraggregat vorgeschaltet ist. Denn dadurch ergänzt erfindungsgemäss das Hochscheraggregat die Wirkweise des Mischkneters, indem er die Einmischfähigkeit des Hochscheraggregats nutzt und den Nachteil eines Hochscheraggregats kompensiert, nämlich die limitierte Verweilzeit des Hochdrehzahl-Hochscheraggregats bzw. die fehlende kontinuierliche Betriebsweise des Grossvolumen-Hochscheraggregats.

Als Ausgangsmaterial im Rahmen der Erfindung wird das im Trockenlöseverfahren eingebrachte Gemisch aus Wasser, Zellulose und einem Funktionsmedium angesehen. Das Transfergemisch entspricht dabei einem Zwischenschritt, bei dem das Ausgangsmaterial zwar im Hochscheraggregat vermischt wurde und noch nicht zu einer Formlösung verarbeitet worden ist. Als Formlösung wird im Rahrern der Erfindung bezeichnet, was sich im Nachgang im Wesentlichen zur Verformung, wie insbesondere zum Spinnen - auch Extrudieren genannt, eignet.

Das Produktvolumen entspricht dem Volumen, welches ein Prozessorgan wie beispielsweise der erfindungsgemässe Mischkneter, an zu verarbeitendem Produkt enthält. Das Verhältnis von Produktvolumen und Prozessvolumen entpricht dem Füllgrad.

Das Prozessvolumen entspricht dem Volumen, in dem ein Prozessorgan wie beispielsweise der erfindungsgemässe Mischkneter, das zu verarbeitende Produkt fassen kann. Damit ist im Falle von Rotor-Stator-Systemen insbesondere das gerührte Volumen gemeint, so dass ungerührte Volumina in beispielsweise Anschlussstuzen nicht als Prozessvolumen aufzufassen sind. Es kann beispielsweise durch «Auslitern» ermittelt werden, indem der Prozessarum mit einer Flüssigkeit gänzlich befüllt wird, dessen Volumen gemessen wird.

Das Mischknetern typische zweidimensionale (radiale und axiale) Kämmen stellt ein grundsätzlich anderes Mischknetprinzip dar als bei Extrudern, bei denen die Mischwirkung typischerweise nur radial und mit in axialem Abstand zueinander angeordneten Zonen durch Mischknetblöcke oder durch erzwungenen partiellen Rückfluss und immer vergleichsmässig sehr kleinräumig erfolgt.

Weil Mischkneter typischerweise bei einem partiellen Füllgrad betrieben werden, der Eintragsstrom und typischerweise auch der Durchsatz des Austragsorgans im Wesentlichen separat (im Sinne von unabhängig von der Drehzahl der Kneterwelle) gewählt werden können und weil das Produkt in Mischknetern bei einer Misch-Knet-Interaktion im Gegensatz zu Extrudern einer axialen Förderung einfach ausweichen kann, ist bei Mischknetern die Drehzahl der Kneterwelle nur eine der Einflussgrössen des Durchsatzes, die mit dem effektiv vorliegenden bzw. angestrebten Füllgrad bzw. dessen axialen Verteilung, dem Eingangsstrom, dem Ausgangstrom und dem Durchsatz abgestimmt wird, und im Vergleich zu Extrudern keine Einflussgrösse, die wesentlichen axialen Druck aufbaut. Auch die Mischkneteinwirkung von Mischknetern für eine gegebene Maschine und ein gegebenes Produkt hängt nicht nur von der Drehzahl ab, sondern insbesondere auch von frei wählbaren Einstellgrössen Verweilzeit und Füllgrad.

Bei Extrudern hingegen hängt nicht nur die Mischknetwirkung sondern auch die Produktförderung im Wesentlichen direkt von der Drehzahl ab (Zwangsförderung), was dazu führt, dass die Produktförderung wegen der für hohe Mischung notwendigen hohen Drehzahlen schnell und die Verweilzeit in Folge dessen im Vergleich zu Mischknetern kurz ist. Das ergibt sich insbesondere aus der für Extruder typischen Eigenschaft, dass für einen gegebenen Extruder die Verweilzeit nicht unabhängig von der Drehzahl eingestellt werden kann. Die Mischkneteinwirkung von Extrudern wird deshalb nur durch den gegenseitigen Eingriff der rotierenden Wellen und axial mit Abständen angeordneten Mischknetzonen in Interaktion mit dem Produkt erreicht. Sie hängt für eine gegebene Maschine mit gegebener Wellenkonfiguration und ein gegebenes Produkt (mit folgedessen gegebener Produktviskosität, die ihrererseits auch wieder abhängig von Temperatur und Drehzahl bzw. Scherung ist) im Wesentlichen nur von der Drehzahl ab. Und zum Erreichen einer gewissen Verweilzeit müssen Extruder im Vergleich zu Mischknetern über eine grosse Wellenlänge L verfügen: Das Längendurchmesserverhältnis L/D von Extrudern ist deutlich grösser als bei Mischknetern und beträgt typischerweise 24 bis 48 im Vergleich zu 3 bis 6 bei typischen Mischknetern.

Traditionell bezwecken beide, Mischkneter und Extruder, die Verarbeitung von Massen mit einer so stark erhöhten Viskosität, dass sie von einem klassischen, typischweise einseitig gelagerten vertikalen Rührorgan in einem grossvolumigen Behälter nicht mehr gerührt bzw. durchmischt werden können, und dass der mechanische Energieeintrag prozessbestimmend ist.

Unter Trockenlöseverfahren sind alle Verfahren zusammengefasst, welche der Herstellung einer Formlösung aus einem Ausgangsmaterial dienen und dabei keine oder keine wesentliche Wasserentfernung (insbesondere Wasserverdampfung) enthalten. Dabei weist das Ausgangsmaterial typischerweise einen 0% bis 10% höheren Wasseranteil auf, als für die Lösung der Cellulose notwendig ist. Eine wesentliche Wasserentfernung bedeutet, dass diese auslegungsbestimmend ist im Sinne, dass eine Anlage wegen der Wasserentfernung grösser ausgelegt werden oder um einen zusätzlichen, das Produkt verarbeitenden Apparat oder eine zusätzliche das Produkt verarbeitende Maschine ergänzt werden muss (einmal abgesehen von einer Anlage zur Kondensation von aus einer Verdampfung entstehenden Brüdenströmen). Trockenlöseverfahren schliessen sowohl trockene Direktlöseverfahren mit NMMO oder einem IL als Formlösung als auch Protolyt-Löseverfahren mit einer Formlösung auf der Basis eines Protolyten (Säure oder Lauge) wie beispielsweise Natronlauge oder Phosphorsäure ein.

Eine letzte Prozessstufe wird dadurch definiert, dass in dieser letzten Prozessstufe aus dem Transfergemisch eine Formlösung hergestellt wird. Davon unabhängig und nicht als Prozessstufe im Rahmen der Erfindung zu benennen sind beispielsweise nachfolgend ein Austragsorgan und weitere zwischengeschaltete Pumpen, Filter und Pufferbehälter oder dergleichen, die bis zur Verspinnung / Formgebung noch notwendig sind und typischerweise dem Transport oder einer Filtration, Entgasung oder einer Druck- und Massenstromstabilität der Formlösung dienen.

Die Verarbeitung des Transfergemischs zu einer Formlösung besteht dabei aus einem Löseprozess, auch Lösen genannt. Dieser benötigt für eine gewisse Misch- und Knet-Intensität (insbesondere bestimmt durch die spezifische Ausführungsform des Mischkneters und die Rotationsgeschwindigkeit der Kneterwelle) für ein bestimmtes Produkt (insbesondere bestimmt durch Art und Anteil von Zellulose und Funktionsmedium) eine bestimmte Zeitdauer. Letztendlich resultiert dieser Prozessteil in einem - nachfolgend einer Verformung zuführbaren - Formlösungsstrom. Da die Auslegung für eine gewisse Misch- und Knet-Intensität und ein gewisses Produkt zeitbestimmt ist, ist das Prozessvolumen des Mischkneters im Wesentlichen direkt proportional zur Kapazität des Formlösungstroms (auch Formlösungstromkapazität genannt). Dieser sogenannte Volumen-Scale-up steht im Gegenteil zu dem, dem Fachmann bekannten, Oberflächen-Scale-Up eines Mischkneters für die Herstellung einer Formlösung, dessen Prozess durch die Verdampfung von Wasser geprägt ist, wozu der Mischkneter über genügend Heizflächen verfügen muss, was grössenbestimmend ist. Im Umkehrschluss könnte bei einem Oberflächen-Scale-up der Mischkneter kleiner sein, wenn er weniger oder kein Wasser verdampfen müsste.

Dies zeigt zudem den Vorteil, dass die Erhöhung der Misch- und Knet-Intensität beim Extruder wegen der Zwangsförderung des Produkts immer mit einer Reduktion der Verweilzeit des Produkts verbunden ist, während beim Mischkneter die Misch- und Knet-Intensität erhöht werden kann, und die Verweilzeit unabhängig davon frei gewählt (also ebenfalls erhöht oder reduziert) werden kann. Der erfindungsgemässe Mischkneter wird dazu genutzt, das zum Erreichen einer Formlösung notwendige Mischen und Kneten des Produkts nach dessen Austritt als Transfergemisch aus einem Hochscheraggregat als vorgehendes Prozessorgan durchzuführen. Dies ermöglicht es, das Hochscheraggregat zu seinen Stärken einzusetzen, nämlich zum Vermischen von zwei Pulvern bzw. von Pulver in einer Flüssigkeit, und das Produkt danach im erfindungsgemässen Mischkneter unter Misch- und Kneteinwirkung weiter zu behandeln, dessen Schereinwirkung auf das Produkt viel geringer ist, als es bei Hochscheraggregaten typisch ist, und somit insbesondere mehr Zeit zum Lösen zur Verfügung steht.

Durch die hohe Schereinwirkung erzeugt das Hochscheraggregat einen vorteilhaften Ausgangszustand des Produkts, der sich zumindest dadurch auszeichnet, dass dieses als Transfergemisch für die Verarbeitung im Mischkneter über die notwendige Homogenität verfügt.

Bei der Verwendung eines Hochdrehzahl-Hochscheraggregats als Hochscheraggregat ist es möglich, unter typischen Prozessbedingungen zehnfache bis hundertfache Leistungseinträge pro Prozessvolumen (spezifischer mechanischer Leistungseintrag) gegenüber Mischknetern zu generieren. Der viel höhere spezifische mechanische Leistungseintrag erzeugt im Hochdrehzahl-Hochscheraggregat einen engen Kontakt der Komponenten des Ausgangsmaterials und schafft dadurch einen für den nachfolgenden Löseprozess vorteilhaften Ausgangszustand. Dieser vorteilhafte Ausgangszustand des Produkts zeichnet sich dadurch aus, dass dieses als Transfergemsich für die Verarbeitung im Mischkneter neben der notwendigen Homogenität auch gewisse Anteile von gelöster Zellulose enthalten kann. Durch die kontinuierliche Betriebsweise werden diese unmittelbar im Mischkneter zu einer Formlösung weiterverarbeitet bevor eine Zersetzung des Produkts erfolgen kann.

Bei der Verwendung eines Grossvolumen-Hochscheraggregats als Hochscheraggregat ist es möglich, die hohe Schereinwirkung insbesondere durch grosse Scherflächen bzw. lange Scherspalte in Kombination mit langen Verweilzeiten, wie sie mit der chargenweisen Betriebsweise einfach zu erreichen sind, miteinander funktional zu kombinieren.

Wegen der chargenweisen Betriebsweise wird bei der Verwendung eines Grossvolumen-Hochscheraggregats zur Herstellung des Transfergemischs vorzugsweise vermieden, dass das Transfergemisch bereits Anteile von gelöster Zellulose bzw. gelöstem Zellstoff enthält, da solche wegen der chargenweise Betriebsweise die unmittelbare Weiterverarbeitung im Mischkneter nicht sichergestellt ist, was zu teilweiser Zersetzung und uneinheitlicher Produktqualität führen kann. Dies bedeutet auch, dass das Transfergemisch, das durch ein Grossvolumen-Hochscheraggregat hergestellt wird, vorzugsweise über eine gewisse Lagerstabilität verfügt.

Lagerstabilität bedeutet, dass das Produkt gelagert werden kann, ohne seine Zusammensetzung und seine chemischen und physikalischen Eigenschaften nicht so stark zu verändern, dass es für die weitere Verarbeitung ohne inakzeptable Produktqualitätsminderung nicht mehr geeignet ist.

Dabei ist es unerheblich, ob das zumindest eine Hochscheraggregat direkt oder durch ein dazwischen liegendes Transferorgan wie beispielsweise eine Zahnradpumpe mit dem erfindungsgemässen Mischkneter verbunden ist, und ob es absatzweise oder kontinuierlich betrieben wird. Zudem ist auch denkbar, dass das Hochscheraggregat nicht mit dem erfindungsgemässen Mischkneter verbunden ist und das Transfergemisch in einem Behälter zwischengelagert wird und zeitlich oder örtlich versetzt dem erfindungsgemässen Mischkneter zugeführt wird.

Auch wenn der erfindungsgemässe Mischkneter unabhängig davon funktioniert, ob das Hochscheraggregat absatzweise oder kontinuierlich betrieben wird, so ist die Funktionsweise des erfindungsgemässen Mischkneters unterschiedlich. Im Fall eines kontinuierlich betriebenen Hochscheraggregats ist es die Aufgabe des erfindungsgemässen Mischkneters, die Misch- und Knetzeit des Produkts zu verlängern, bis die Lösezeit erreicht ist, da die in einem kontinuierlich betriebenen Hochscheraggregat zur Verfügung stehende Verweilzeit typischerweise unter der erforderlichen Lösezeit liegt. Im erfindungsgemässen Mischkneter wird das Produkt im Vergleich zum Hochscheraggregat wegen der erwähnten geringeren Schereinwirkung so schonend gemischt und geknetet, dass das Produkt nicht oder nicht wesentlich überhitzt.

Im Fall eines absatzweise betriebenen Hochscheraggregats wie typischerweise eines Z-Kneters, von welchem das Transfergemisch am Ende jedes Absatzes (also absatzweise) vorzugsweise durch ein kontinuierliches Austragsorgan ausgetragen und dem erfindungsgemässen Mischkneter zugeführt wird, sorgt der erfindungsgemässe Mischkneter neben zusätzlichen Knetens und Mischens zu einer homogenen Formlösung insbesondere auch für einen kontinuerlichen Formlösungsstrom, mit dem der ebenfalls kontinuierlich stattfindende und sehr schwankungsempfindliche Formgebungs- bzw. Spinnprozess gespiesen wird. Die Schwankungsempfindlichkeit bezieht sich dabei neben der Kontinuität des Massenstroms insbesondere auf die Kontinuität der Qualität der Formlösung, insbesondere die Homogenität, Viskosität und Zusammensetzung sowie die Beeinflussung dieser Eigenschaften durch Abbauvorgänge der Zellulose und des Funktionsmediums. Eine absatzweise Formlösungsherstellung ist im industriellen Massstab wegen der Schwankungsempfindlichkeit des Formgebungs- bzw. Spinnprozesses nicht geeignet. Zudem verfügt ein nur absatzweise austragender Prozessraum über keine Selbstreinigung durch nachfliessendes Produkt wie beim kontinuierlichen Betrieb, was zu einem zeitraubenden Reinigungsaufwand und Produktverlust führt, zumal Formlösungen typischerweise viel klebriger als das Produkt vor dem Lösezustand sind.

Ein Transferorgan schliesst Förderorgane, Behälter oder Kombinationen dieser Elemente mit ein. Förderorgane sind dem Fachmann bekannt und schliessen insbesondere nicht komprimierende Ausführungen mit ein. Der Behälter kann gerührt oder umgewälzt sein, um insbesondere einer Entmischung entgegen zu wirken.

Zudem besteht die Möglichkeit, während der Verarbeitung des Transfergemischs zu einer Formlösung einen im Transfergemisch verbleibenden Wasseranteil auf den für den Löseprozess und die Formlösung erforderlichen Anteil zu reduzieren. Diese Verdampfungsaufgabe ist neben der Löseaufgabe des erfindungsgemässen Mischkneters jedoch erstens optional und zweitens dieser untergeordnet und entscheidet nicht über dessen Baugrösse. Für diese Verdampfung kann der Mischkneter neben dem durch Viskosität in Kombination mit einem Prozessvolumen und mit mindestens einer rotierenden Kneterwelle sich ergebenenden mechanischen Energieeintrag noch Heizflächen für einen thermischen Energieeintrag erfordern, die im Mischkneter angeordnet sind.

So bedeutet im Rahmen dieser Erfindung die Kapazität des Mischkneters einerseits eine Verdampfungskapazität und andererseits eine Formlösungsstromkapazität.

Der erfindungsgemässe Mischkneter nutzt beim Direktlöseverfahren die bisher nicht bekannte Erkenntnis, dass Mischkneter unterhalb eines gewissen Wasseranteils im Transfergemisch nicht mehr mit einem kleineren Prozessvolumen ausgeführt werden können, ohne dass dabei die Formlösungsstromkapazität reduziert werden müsste. Das liegt daran, dass von diesem Wasseranteil an, das für die Lösezeit notwendige Prozessvolumen zwingend aufgebracht werden muss - die Formlösungsstromkapazität also auslegungsbestimmend ist. Im Umkehrschluss bedeutet dies, dass beim Direktlöseverfahren der Mischkneter mit zunehmendem Wassergehalt im Transfergemisch ab einem gewissen Wasseranteil grösser gebaut werden muss, als für die Formlösungsstromkapazität erforderlich wäre, weil die Verdampfungskapazität eine grössere Bauweise erfordert, um entsprechende Heizflächen im Mischkneter anzuordnen.

Der erfindungsgemässe Mischkneter besteht deshalb aus einem Mischkneter, dessen Grösse ausschliesslich die Anforderungen einer Formlösungsstromkapazität erfüllt.

Die optionale Verdampfungskapazität des vorgehenden Prozessorgans zur Herstellung des Transfergemischs durch Verdampfung von im Wesentlichen Wasser (im Folgenden Hauptverdampfung genannt) ist entsprechend angepasst und ergibt sich aus den Heizflächen und dem viskositäts-, und kneterwellendrehzahlabhängigen mechanischen Energieeintragsvermögen des Mischkneters. Es ist im Rahmen der Erfindung auch vorgesehen, dass das Transfergemisch in mehreren vorgehenden Prozessorganen aus einem Ausgangsmaterial hergestellt wird. Diese vorgehenden Prozessorgane im Rahmen dieser Erfindung können dabei in Reihe oder parallel geschalten sein und beziehen sich auf das Hochscheraggregat.

Der erfindungsgemässe Mischkneter zur Verarbeitung des Transfergemisches zu einer Formlösung nach dem Trockenlöseverfahren ist ein Mischkneter mit einer Einspeisung, einem Gehäuse, mindestens einer im Gehäuse rotierenden Kneterwelle und einem Austrag, wobei die Einspeisung ein Produkt in Form des Transfergemischs im Wesentlichen aus Zellulose, Wasser und dem Funktionsmedium in das Gehäuse einbringt, wobei das Transfergemisch rührend verarbeitet wird, sodass die Formlösung entsteht, wobei die Formlösung den Austrag mit einem Anspeisestrom anströmt, und dann den nachfolgenden Prozessorgan, wie beispielsweise der Austragsschnecke, der Transferpumpe, einer Filterstation, dem Pufferbehälter, der Spinnpumpe und der Spinndüse zugeführt wird.

Hierbei kann als eine Ausführungsform der mechanische und thermische Energieeintrag auch dazu genutzt werden, einen Teil des Wassers zu verdampfen, bis eine Formlösung vorliegt. Das ist dann der Fall, wenn der Wasseranteil im Ausgangsmaterial höher ist als für eine Formlösung notwendig macht.

Eine weitere Ausführungsform zeichnet sich dadurch aus, dass ein überschüssiger Wasseranteil im Ausgangsmaterial gezielt so gewählt wird, dass die im Mischkneter durch die Misch- und Knetwirkung während einer bestimmten Verweilzeit eingetragene mechanische Energie erstens zur beabsichtigten Produkterwärmung genutzt wird und zweitens zur Verdampfung des Wasseranteils, sodass vorzugsweise eine Überhitzung aber zumindest eine wesentliche Überhitzung des Produkts vermieden wird. Dies hat gegenüber den ganz ohne Verdampfung auskommenden Ausführungsvarianten auch den oben erwähnten Vorteil eines Vorquellens und entlastet eine Rückgewinnung des Funktionsmediums aus dem Spinnbad bzw. Formgebungsbad. Hierbei besteht eine vorzugsweise Ausführungsform darin, dass ein gegenüber einer Formlösung überschüssiger Wassergehalt im Ausgangsmaterial bzw. im Transfergemisch gezielt so gewählt wird, dass die zu dessen Verdampfung erforderliche Energie aus dem durch Dissipation erfolgenden mechanischen Energieeintrag stammt und kein thermischer Energieeintrag über beheizte Flächen und vorzugsweise auch keine thermische Energieabführung zur Vermeidung einer Überhitzung oder einer wesentlichen Überhitzung über gekühlte Flächen erforderlich ist. Der Vorzug dieser Ausführungsform liegt einerseits im höheren Wasseranteil im Funktionsmedium, was dessen Maschinen-Herstellungskosten bzw. Funktionsmittel-Rückgewinnungskosten reduziert, und andererseits in der kürzeren Herstellung des Transfergemischs, weil das Wasser die Durchdringung von Zellulose und Funktionsmedium begünstigt. Die Vermeidung beheizter oder gekühlter Flächen bezieht sich insbesondere auf die an den Kneterwellen angebrachten Scheiben, vorzugsweise zudem aber auch auf die Wellen und/oder die inneren Gehäuseoberflächen. Apparativ bedeutet ersteres, die Scheiben nur heizhohlraumfrei oder auch als reine Supporte mit minimierter Seitenfläche ausführen zu können, was die Kneterwelle entlastet und deren Herstellung vereinfacht. Zudem bedeutet dies eine gleichmässige Belastung der Keterwelle, was unter anderem generell zu einer längeren Lebensdauer des Mischkneters führt.

Die Praxis mit bisher für das erfindungsgemässe Formlösungsverfahren nach dem Direktlöseverfahren mit NMMO als Funktionsmedium von den Erfindern verwendeten Mischknetertypen hat gezeigt, dass die Verweilzeit im Mischkneter in einem Bereich zwischen 2 und 15 Minuten liegt, wobei die Verweilzeit massgeblich durch die Lösezeit der Zellulose bedingt wird und die genaue Lösezeit nicht nur von der Behandlung im Hochscheraggregat abhängt sondern auch zum Beispiel von der Zellulosekonzentration, dem Zellulosetyp, deren Vorbehandlung und dem Typ des Funktionsmediums abhängt und auch über diese Bereiche hinausgehen kann. Mit einem Mischknetervolumen von 2500 L kann eine industrielle Produktionskapazität von beispielsweise 6.4 Kilotonnen pro Jahr Zellulose (bzw. bei einer Weiterverarbeitung zellulosische Fasern) erreicht werden. Dabei kann auf eine Beheizung der Scheiben der Kneterwelle und eine Unterteilung in mehrere Temperaturzonen verzichtet werden, sofern das Produkt mit einer Konzentration entsprechend einem 1.3-Hydrat in den Mischkneter eingebracht wird. Das entspricht einer Verweilzeit auf ca. 12 Minuten, die im Stand der Technik für ein Trockenverfahren mit einem Extruder nicht erreicht werden kann.

Gerade beim Einsatz von NMMO und IL als Funktionsmedium zeichnet sich das Transfergemisch dadurch aus, dass der Zustand des Produkts noch nicht denjenigen einer Formlösung erreicht hat. Dies kann sich dadurch auszeichnen, dass die thermo-mechanische Behandlung des Ausgangsmaterials in der vorangestellten Prozessstufe unzureichend ist, in dem Sinne, dass die im Hochscheraggregat bereitgestellte Lösezeit für die vorliegende Misch- und Kneteinwirkung zu kurz ist, oder aber, dass der Wasseranteil durch unzureichende oder fehlende Verdampfung noch zu hoch ist.

Die Notwendigkeit, den Löseprozess im Mischkneter im Rahmen der Erfindung mit einem Transfergemisch zu beginnen liegt in der wegen geringer Scherung ungenügenden Fähigkeit von Mischknetern, Flüssigkeiten in einen pulverigen Feststoff genügend einzumischen und Zellulose-Agglomerate soweit zu vermeiden bzw. zu zerkleinern, dass sie im Mischkneter vom Funktionsmedium gelöst werden können. Somit besteht die Herstellung eines Transfergemischs aus einem Ausgangsmaterial mehrheitlich aus einer mechanischen Bearbeitung, insbesondere aus einem Mischen und Scheren, sodass sich das Transfergemisch im Vergleich zum Ausgangsmaterial insbesondere durch seine höhere Homogenität unterscheidet während die Zusammensetzung im Wesentlichen unverändert bleibt und der Löseprozess noch nicht oder nur teilweise einsetzt. Im Wesentlichen unverändert bezieht sich in diesem Zusammenhang insbesondere auf den Wassergehalt des Produkts, der sich durch Verdampfung oder Verdunstung infolge Eintrags von insbesondere Dissipationsenergie im Hochscheraggregat während der Verarbeitung des Ausgangsmaterial zum Transfergemisch reduzieren kann.

Das Transfergemisch unterscheidet sich von der Formlösung dadurch, dass es dem Produkt in einem Zustand entspricht, bevor es zu einer formbaren bzw. spinnbaren Lösung, also der Formlösung überführt wird. Eine formbare bzw. spinnbare Lösung liegt dann vor, wenn sich alle wesentlichen zellulosischen Bestandteile des Ausgangsmaterial gelöst haben. Wesentlich bedeutet in diesem Zusammenhang einen so geringen Anteil an nicht gelösten Bestandteilen, dass die sogenannten Filterstandzeiten ein wirtschaftlich akzeptables Mass erreichen.

Eine Filterstandzeit bezieht sich auf Filter, welche typischerweise nach der Prozessstufe zur Herstellung der Formlösung und vor der Prozessstufe zur Formgebung bzw. des Spinnens verwendet werden. Die Filterstandzeit entspricht der Zeitdauer bzw. der Nutzungsdauer, bis ein Filter ausgewechselt werden muss, weil der Druckabfall über den Filter zu hoch wird, welcher durch die Ansammlung von für die weitere Verarbeitung unerwünschten Bestandteilen ansteigt. Diese Bestandteile können zum Beispiel sowohl nicht gelöste zellulosische Fasern als auch nicht-zellulosische Verunreinigungen darstellen. Die konkrete Wahl einer Filterstandzeit unterliegt deshalb gesamtwirtschaftlichen Kosten und qualität-optimierenden Aspekten.

Das Transfergemisch unterscheidet sich weiterhin vom Ausgangsmaterial dadurch, dass das Transfergemisch durch thermo-mechanische oder auschliesslich mischende Behandlung im vorgehenden Prozessorgan über eine höhere Homogenität verfügt und noch als Suspension oder als Teillösung vorliegt. Bei der Ausführungsform mit einem Wasseranteil im Ausgangsmaterial, der höher als für eine Formlösung notwendig ist, ist der erfindungsgemässe Mischkneter zur Verarbeitung des Transfergemisches wie erwähnt gekennzeichnet dadurch, dass das Produkt im Mischkneter über einen Wasseranteil verfügt, der demjenigen Wasseranteil entspricht, welcher während der Lösezeit noch verdampft werden muss und kann, ohne das Prozessvolumen des Mischkneters zu vergrössern, was den Vorteil hat, dass der Mischkneter kleinstmöglich gebaut werden kann und idealerweise nicht alle Oberflächen beheizt werden müssen.

Dies führt zu einer optimalen Verwendung des Mischkneters, da seine Stärke das Kneten mit im Vergleich zu Hochdrehzahl-Hochscheraggregaten auf das Prozessvolumen bezogenem geringem mechanischen Leistungseintrag ist sowie eine frei wählbare Verweilzeit bei kontinuierlicher Betriebsweise für das vollständige Lösen der Zellulose. Dies ist insbesondere auch vorteilhaft, da gleichzeitig die Stärke des Hochscheraggregats, nämlich das Mischen und Kneten unter hohem volumenbezogenen mechanischen Leistungseintrag bei vergleichsweise geringen Verweilzeiten von typischerweise 0,2 Sekunden bis 2 Minuten zur Verarbeitung des Ausgangsmaterials zu einem Transfergemisch genutzt wird.

Bei der Verwendung von Grossvolumen-Hochscheraggregaten als dem erfindungsgemässen Mischkneter vorgeschaltete Prozessstufe liegt die optimale Verwendung des Mischkneters in der kontinuierlichen Betriebsweise mit im Wesentlichen frei wählbarer Verweilzeit und nicht nur mechanischem sondern typischerweise auch thermischem Energieeintrag für das vollständige Lösen der Zellulose. Der Vorteil der erwähnten kontinuierlichen Betriebsweise liegt in der Vermeidung von zeitraubenden Reinigungszyklen und der Minimierung von für die Formlösungs- und Formgebungsqualität sehr relevanten Qualitätsschwankungen. Dies ist insbesondere auch vorteilhaft, da gleichzeitig die Stärke des Grossvolumen-Hochscheraggregats, nämlich die wegen der chargenweise Betriebsweise einfache Dosierbarkeit und das Einmischen und Kneten von grossen Mengen von Pulvern in eine Flüssigkeit zur Verarbeitung des Ausgangsmaterials zu einem Transfergemisch genutzt wird.

Der auf das Prozessvolumen bezogene mechanische Leistungseintrag bezieht sich auf einen typischen Füllgrad. Während dieser bei Extrudern und Hochdrehzahlmischern typischerweise bis zu 100% beträgt, beträgt er für Trockenverfahren für Mischkneter und Z-Kneter oder Sigmablade-Mischern typischerweise bis zu ca. 50% bis 70%.

Da Verdampfung keine Stärke von Hochscheraggregaten ist, bedeutet im Umkehrschluss ein zu seinen Stärken eingesetztes vorgehendes Prozessorgan, dass die Eingangskonzentration an Wasser im Transfergemisch im Wesentlichen derjenigen im Ausgangsmaterial entspricht. «Im Wesentlichen» bezieht sich dabei auf den ordungsgemässen Betrieb mit optimaler Einstellung des Hochscheraggregats mit Ausnahme von Leckagen, Verdunstung oder Musterentnahmen.

Das Prozessvolumen des Mischkneters ergibt sich für einen spezifischen Füllgrad aus der erforderlichen Formlösungsstromkapazität, die sich aus der nach der thermo-mechanischen Vorbehandlung im vorgehenden Hochscheraggregat und der Verweilzeit in einem allfälligen Behälter noch notwendigen Lösezeit ergibt. Diese hängt ihrerseits von verschiedenen Faktoren ab, wie beispielsweise der Zellulosekonzentration, der Partikelgrösse der Zellulose, vom Aggregatzustand des Funktionsmediums, dem Zellulosetyp, von deren Vorbehandlung, vom Funktionsmedium, und von der Knet- und Mischintensität des Mischkneters. Das Funktionsmedium kann als Flüssigkeit aber auch beispielsweise als Granulat oder in Pulverfom in festem Aggregatzustand sein. So ist dem Fachmann beispielsweise bekannt, dass Zellulose unterschiedlichen Ursprungs unterschiedlichen Lösezeiten bedarf, wie beispielsweise unterschiedliche Holztypen andere Pflanzen wie bspw. Baumwolle oder unterschiedliche Polymerisierungsgrade (sog. DP) der Zellulose. Auch ist dem Fachmann bekannt, dass in unterschiedlichen Funktionsmedien voneinander abweichende Lösegeschwindigkeiten und folglich Lösedauern auftreten können.

Das Funktionsmedium versteht sich unabhängig von seinem Aggregatzustand im Ausgangsmaterial. So wird beispielweise NMMO, wenn es als Monohydrat bei Raumtemperatur in fester Form mit einem Zellulosepulver vermischt wird und erst im Verlauf der weiteren Verarbeitung flüssig wird, ebenfalls als Funktionsmedium bezeichnet.

Als zusätzliche optimierte Prozessvariante wird erfindungsgemäss die Drehzahl des Hochscheraggregats so eingestellt, dass keine mechanische Leistung in das Produkt eingetragen wird, welche durch Kontaktkühlung im erfindungsgemässen Mischkneter für ein sicheres und energieeffizientes Verfahren wieder abgeführt werden muss. Dies vereinfacht die Prozesssteuerung und erhöht, insbesondere bei Verwendung von NMMO als Funktionsmedium, die Prozesssicherheit des Verfahrens. Zusätzlich bringt die beschriebene Prozessvariante den Vorteil einer minimalen thermischen Belastung des Gemisches im Mischkneter mit sich, was der Produktqualität der Formlösung zuträglich ist. Apparativ bedeutet dies, dass die Kneterwelle nicht über mehrere Heiz/Kühl-Zonen verfügen muss. Bei der vorliegenden Erfindung können die Wellenaufbauten vorzugsweise heizhohlraumfrei ausgeführt sein und der durch Kneten eingebrachte mechanische Energieeintrag reicht aus, um aus dem Transfergemisch eine Formlösung herzustellen. Idealerweise bearbeitet das vorgehende Prozessorgan in Form eines Hochscheraggregats bei der Herstellung des Transfergemisches erfindungsgemäss das Produkt bereits so weit, dass der erfindungsgemässe Mischkneter dem Transfergemisch kein Wasser entziehen muss, und die Dissipationsenergie führt nur zu einer Erwärmung des Produkts ohne dieses zu überhitzen oder zumindest ohne dieses nicht wesentlich zu überhitzen, sodass auch keine Kondensation von im Mischkneter verdampften Wasser nötig ist, und wird es mit einem Ausgangsmetarial beschickt, dessen Wasseranteil bereits demjenigen einer Formlösung entspricht.

Im Fall von NMMO als Funktionsmedium zeichnet sich eine Prozesssicherheit steigernde vorzugsweise Ausführung dadurch aus, dass der Wasseranteil im Transfergemisch so gross ist, dass der Wasseranteil im Hochscheraggregat genügend hoch ist, dass das Risiko einer autokatalytischen Zersetzung des NMMO gering ist. Dies ist gegeben, sofern sich der Wassergehalt des Transfergemischs im folgenden allgemeinen Bereich befindet:

$$\text{minimal } x_{H2O} = -0{,}4525 \ x_{Cell} + 0{,}1465$$

$$\text{maximal } x_{H2O} = 0{,}2864 \ x^2_{Cell} - 0{,}6786 \ x_{Cell} + 0{,}2288.$$

Bevorzugt befindet sich der Wassergehalt des Transfergemischs im folgenden bevorzugten Bereich:

$$\text{maximal } x_{H2O} = 0{,}2864 \ x^2_{Cell} - 0{,}6786 \ x_{Cell} + 0{,}2288$$

$$\text{minimal } x_{H2O} = -0{,}00022 \ x^2_{Cell} - 0{,}5317 \ x_{Cell} + 0{,}1800$$

In diesen beiden Gleichungen für einen allgemeinen und bevorzugten Bereich eines NMMO Transfergemischs beschreibt $x_{H2O}$ den Massenanteil an Wasser bezogen auf das Gesamtgemisch und $x_{Cell}$ den entsprechenden Anteil der Zellulose. Der Energieeintrag des vorgehenden Prozessorgans wird also so gewählt, dass die benötigte Prozessenergie für Erwärmung und optional Verdampfung des Gemisches im Mischkneter bevorzugt nur aus der mechanischen Leistung des Mischkneters resultiert. Die angegebenen Wassergehalte beziehen sich hierbei auf einen in der Industrie typischen Bereich an Zellulosegehalten und Zelllulosequalitäten (z.B. Molmassenverteilung), die dem Fachmann bekannt sind. Beispielsweise ergibt sich bei einem Zelluloseanteil von 0,110 ein minimaler Wasseranteil von 0,097 für den allgemeinen Transferbereich.

Somit steigert sich die maximale Formlösungsstromkapazität pro Mischkneter als letztes Prozessorgan in einem mehrstufigen Trockenlöseverfahren und somit die maximale Produktionskapazität pro Produktionslinie insgesamt.

Als Funktionsmedium für das Ausgangsmaterial wird erfindungsgemäss ein vorzugsweise und nicht abschliessend eine IL oder NMMO oder einen Protolyten, also eine Säure oder eine Base, wie bspw. In der CA 3 020 820 A1 oder WO 96/06207 A1 und der WO 96/06208 A1 beschrieben, enthaltendes Gemisch beigegeben. Das Funktionsmedium dient dazu, die Zellulose bei entsprechenden Voraussetzungen zu lösen.

In der erwähnten Kombination mit einem vorgehenden Prozessorgan zur Herstellung eines Transfergemischs ist eine vorzugsweise Ausführungsform des Mischkneters gekennzeichnet dadurch, dass sie auf die Verarbeitung eines Transfergemisches ausgelegt ist, welches so gewählt wird, dass die Viskosität des Transfergemischs nicht nur niedrig genug ist, dass eine wesentliche Überhitzung im Hochscheraggregat vermieden wird, sondern auch gross genug, dass der durch Reibung erfolgende mechanische Energieeintrag beim Mischkneter so hoch ist, dass der Bedarf an - den mechanischen Energiegeeintrag ergänzendem - thermischem Energieeintrag in den Mischkneter so gering ist, dass die Aufbauten der Kneterwelle nicht dem thermischen Wärmeaustausch dienen müssen, sondern heizhohlraumfrei gestaltet werden können. Eine weitere vorzugsweise Ausführungsform ist dabei dadurch gekennzeichnet, dass der mechanische Energieeintrag durch die Wahl der Grösse und Geometrie des Mischkneters, der Rotationsgeschwindigkeit der Kneterwelle, der Viskosität des zu verarbeitenden Produkts und der Verweilzeit des Produkts im Mischkneter so gewählt wird, dass der Mischkneter ohne thermische Austauschflächen der Kneterwelle oder des Gehäuses ausgestaltet werden kann, indem die Kneterwelle ohne Innenrohr oder das Gehäuse des Mischkneters ohne Doppelmantel ausgerüstet wird. Dies ermöglicht eine deutlich einfachere, günstigere und schnellere Bauweise der Kneterwelle und des Gehäuses.

In einem vorangestellten Prozessschritt liegt das Ausgangsmaterial als Gemisch aus Zellulose, Wasser und Funktionsmedium vor, dessen Zusammensetzung stark variieren kann.

Das Ausgangsmaterial wird dabei im vorangestellten Prozessschritt zu einem Transfergemisch. Dieser Prozessschritt kann vorzugsweise in einem oder mehreren Hochscheraggregaten als vorgehendes Prozessorgan bzw. vorgehende Prozessorgane erfolgen.

Im erfindungsgemässen Transfergemisch liegt die Zellulose als Suspension oder teilgelöst vor. Im Fall von Wasserverdampfung im Mischkneter und NMMO als Funktionsmedium kann bei einer auf Prozesssicherheit im Hochscheraggregat ausgelegten Betriebsweise der minimale Wasseranteil im NMMO des Transfergemischs der mathematischen Formel entnommen werden.

Allen Fällen gemeinsam liegt der erfinderische Gedanke zugrunde, den erfindungsgemässen Mischkneter für eine trockene oder semi-trockene Formlösungsherstellung zu nutzen. Semi-trocken bedeutet in diesem Zusammenhang, dass zwischen Ausgangsmaterial und Formlösung zwar Wasser verdampft werden muss, diese Prozessaufgabe aber für das erfindungsgemässe Hochscheraggregat und den erfindungsgemässen Mischkneter nicht auslegungsbestimmend ist. Dies zieht nach sich, dass der Mischkneter durch die Formlösungsstromkapazität bestimmt, was die kleinstmögliche Baugrösse des Mischkneters für eine bestimmte Formlösungsstromkapazität bedeutet beziehungsweise die maximale Formlösungsstromkapazität für eine bestimmte Mischknetergrösse.

Zudem ist allen Fällen gemeinsam die Idee, mit den Stärken des erfindungsgemässen Mischkneters die Defizite von Hochscheraggregaten zu kompensieren, welche mindestens daraus besteht, dass das erfindungsgemässe Hochscheraggregat sich zwar bei gegebener Kapazität dazu eignet, die Komponenten des Ausgangsmaterial zu einem Transfergemisch vermischen, dass es aber nicht dazu geeignet ist, dieses Transfergemisch zu einer Formlösung weiter zu verarbeiten, und dass sich der Mischkneter dazu eignet, das Transfergemisch zu einer Formlösung weiter zu verarbeiten und nicht dazu eignet, die Komponenten des Ausgangsmaterial zu einem Transfergemisch vermischen.

Der Mischkneter eignet sich durch seine technischen Eigenschaften, wie einem im Vergleich zu einem Hochscheraggregat geringen mechanischen Energie- und Dissipationsenergieeintrag, in besonderer Weise dazu, das Produkt mischend und knetend von einem Transfergsmisch zu einer Formlösung zu verarbeiten, ohne dass das Produkt überhitzt oder nicht wesentlich überhitzt wird. Das Hochscheraggregat weist hingegen einen höheren mechanischen Energie- und Dissipationsenergieeintrag auf und eignet sich deswegen zur Verarbeitung des Ausgansmaterials zum Transfergemisch.

Die erfindungsgemässen Mischkneter zeichnen sich gegenüber Extrudern durch eine weitgehend unabhängig von der Drehzahl der Kneterwelle und somit unabhängig von der Mischknetintensität frei wählbare Verweilzeit aus. Dies wird unterstützt durch den im Mischkneter vergleichbar geringeren Eintrag an Dissipationsenergie pro Prozessvolumen und demzufolge eine - wegen der Überhitzungsgefahr bedeutende - geringere Erwärmung des Produkts. Der Mischkneter nutzt also den intensiven Produktkontakt in Extrudern beim Einmischen von zwei Pulvern oder von einem Pulvern in eine Flüssigkeit und kompensiert die limitierte Verweilzeit von Extrudern.

Der erfindungsgemässe Mischkneter zeichnet sich gegenüber Z-Knetern oder Sigmablade-Mischern insbesondere durch seine für einen zwingend schwankungsarmen homogenen Formlösungsstrom vorteilhafte kontinuierliche Betriebsweise aus und nutzt die Möglichkeit von Z-Knetern, Pulver in eine Flüssigkeit einfach und in grossen Mengen einzudosieren und mit einem intensiven Produktkontakt mischen und kneten zu können.

Der erfindungsgemässe Mischkneter zeichnet sich gegenüber Hochdrehzahlmischern aus, deren Verweilzeit kürzer als 1 Minute, vorzugsweise kürzer als 30 Sekunden und vorzugsweise insbesondere kürzer als 10 Sekunden beträgt, insbesondere durch seine frei wählbare Verweilzeit und die hohen Drehmomentmöglichkeiten der Kneterwelle aus, und nutzt die Fähigkeit von Hochdrehzahlmischern Pulver in eine Flüssigkeit einfach und in grossen Mengen ein zu dosieren und mit hohem spezifischem Leistungseintrag mischen zu können. Gegenüber allen anderen Hochscheraggregaten und Mischknetern zeichnen sich Hochdrehzahlmischer üblicherweise durch Anwendungen mit geringen Produktviskositäten aus, weswegen sie nicht Stand der Technik für Formlösungsverfahren sind. Ihrer Verwendung als vorgehendes Prozessorgan des erfindungsgemässen Mischkneters beim Trockenlöseverfahren liegt die erfinderische Idee zugrunde, dass das Einmischen so schnell erfolgt, dass auch noch kein wesentlicher Viskositätsanstieg des Produkts erfolgt, weil dazu die Verweilzeit zu kurz ist, sodass der Löseprozess nicht einsetzen oder sich nicht soweit entwickeln kann, dass er die Viskosität des Produkts so sehr ansteigen lässt, dass es die Drehmomentgrenze des Hochdrehzahlmischers überschreitet.

Die Formeln zur Beschreibung des Transfergemisches mit NMMO als Funktionsmedium beziehen sich auf die Herstellung eines Transfergemisches unter thermo-mechanischen Bedingungen, die einen risikoarmen Betrieb eines Hochscheraggregats zulassen und sich in der Praxis bewährt haben. Aufgrund der erläuterten Einflüsse auf die Lösegeschwindigkeit der Zellulose ist es jedoch möglich, dass die Formel eine spinnbare Lösung voraussagt, während in der Praxis trotz geringer Wassergehalte noch ein erfindungsgemässes Transfergemisch mit ungelösten zellulosischen Bestandteilen vorliegt, da eine spezielle thermo-mechanische Behandlung gewählt wurde, wie beispielsweise sehr kurze Zeiten des Produkts zwischen Einspeisung und Auslass. Solch thermo-mechanische Behandlungen gehen aufgrund des damit einhergehenden geringeren Wassergehaltes im Transfergemisch gleichzeitig aber mit einem erhöhten Prozessrisiko durch wesentliche Überhitzung und explosionsartige Zersetzung einher.

Das kann ausserdem erfindungsgemäss auch bedeuten, dass das Ausgangsmaterial auch bei Zusammensetzungen innerhalb des Konzentrationsbereich dem vorangestellten Prozessschritt zugeführt wird, welcher das allgemeine Transfergemisch beschreibt. Üblicherweise entsteht erst durch die prozessspezifische thermo-mechanische Behandlung des Ausgangsmaterials (erhöhte Temperatur und Schereinwirkung) ein Transfergemisch, das sich durch eine teilweise Lösung des Zellstoffes kennzeichnet.

Im Vergleich zu Prozessen mit einem erheblichen, im vorgehenden Prozessorgan zu verdampfenden Wasseranteil zur Herstellung eines Transfergemischs, die typischerweise zur Verdampfung einen thermischen Energieeintrag über heisse Oberflächen verwenden, können Hochscheraggregat und Mischkneter insbesondere Dank guten Mischeigenschaften und effektivem mechanischem Energieeintrag über die drehende Welle, die Drehzahl und somit auch den Energieeintrag schnell einstellen und auch schnell wieder zurücknehmen. Deshalb und wegen ihrer hohen Mischintensität und folgedessen ihrem geringen radialen Temperaturgefälle eignen sich Hochscheraggregate und Mischkneter dazu, mit grosser Genauigkeit - und im Fall von NMMO als Funktionsmedium auch sicher - die Temperatur und so im Regelfall - Kühlung bzw. Wärmeabfuhr zu regeln und somit auch Überhitzung bzw. wesentliche Überhitzung zu vermeiden.

In einem anderen Ausführungsbeispiel passiert das Transfergemisch zunächst ein dem Hochscheraggregat oder den mehreren Hochscheraggregaten nachfolgendes Transferorgan oder Transferorgane, bevor es in den Mischkneter gegeben wird.

Somit gilt die erhöhte Energieeffizienz und Prozesssicherheit nicht nur für den Prozessschritt der Herstellung der Formlösung aus dem Transfergemisch im Mischkneter sondern auch in Kombination mit einem geeigneten vorangestellten Prozessorgan für die gesamte Überführung eines Ausgangsmaterial in eine Formlösung.

Die Materialeigenschaften anhand oben aufgeführter Formeln zur Beschreibung des allgemeinen Transferbereiches mit NMMO als Funktionsmedium ergeben sich aus den folgenden Untersuchungen.

Für den oben dargestellten allgemeinen Transferbereich beschreibt der minimale Wasseranteil $x_{H2O}$ für den Fachmann angelehnt an die US 4,196,282 A diejenige Zusammensetzung, bei der nach visueller Untersuchung das erste Mal Kristalle des NMMOs im Gemisch Zellulose-Wasser-NMMO beobachtet werden konnten. Sie grenzt somit die Gemische, die fähig, sind unter entsprechender thermo-mechanischer Behandlung vollständige Formlösungen zu bilden, von der Kristallphase ab. Die in der US 4,196,282 A in Bezug auf NMMO als Funktionsmedium getätigten Aussagen werden durch Ergebnisse und Beobachtungen aus industriellen Anwendungen und Versuchen der Erfinder im Technikumsmassstab bestätigt. Die Formel zur Beschreibung des maximalen Wasseranteils $x_{H2O}$ des allgemeinen Transferbereiches beruht auf Ergebnissen aus industriellen Anwendungen des Direktlöseverfahrens und Datenerhebungen aus Versuchsreihen der Erfinder im Technikumsmassstab. Sie markiert die obere Grenze des Transferbereiches, innerhalb dessen eine optimale Ausnutzung der spezifischen prozessrelevanten Mischkneter-Merkmale gewährleistet ist. Die beiden dargelegten Formeln umschliessen folglich den Bereich des allgemeinen Transfergemisches.

Zur Beschreibung der Materialeigenschaften des bevorzugten Transferbereiches ist bezüglich des minimalen Wassergehaltes unter anderem auf die US 4,196,282 A zu verweisen. Die Formel kombiniert Erkenntnisse der in der US 4,196,282 A beschriebenen Grenzkurven des Lösungsbereichs mit Ergebnissen aus industriellen Anwendungen des Direktlöseverfahrens und Datenerhebungen aus Versuchsreihen der Erfinder im Technikumsmassstab.

Die Beschreibung des maximalen Wassergehaltes entspricht im bevorzugten Bereich derjenigen des allgemeinen Transferbereichs.

Das Transfergemisch ist in seiner allgemeinen Zusammensetzung und auch in seiner bevorzugten Zusammensetzung auch aufgrund der im Hochscheraggregat gewählten thermo-mechanischen Behandlung und Behandlungsdauer in einem Vor-Lösungs-Zustand. Somit ist auch erreicht worden, dass das Formlösungsverfahren unter optimalen Betriebsparametern des Hochscheraggregats erfolgt ist und die vergleichsweise schwierigen Materialzustände der Formlösung vermieden werden, wenn beispielsweise im Hochscheraggregat eine Übertrocknung oder Zersetzung infolge zu hoher Schereinwirkung stattfindet. Diese schwierigen Materialzustände führen in dem nachfolgenden erfindungsgemässen Mischkneter nicht zu problematischen Prozesszuständen, weil dieser sich durch niedrigere Schereinwirkung und von der Misch- und Kneteinwirkung unabhängige Verweilzeit auszeichnet.

Bei der Formel, welche die allgemeine Zusammensetzung beschreibt, und unter der Voraussetzung, dass NMMO als Funktionsmedium eingesetzt wird, ist ein Ausbringen desjenigen Transfergemisches vorteilhaft, welches gerade noch so viel Wasser enthält, dass eine Weiterverarbeitung zur Lösung in dem nachfolgenden Prozessorgan in einer relativ kurzen Prozesszeit erfolgen kann und andererseits eine Kristallisation des Lösemittels verhindert wird.

Bei der Formel, welche die bevorzugte Zusammensetzung des Transfergemisches beschreibt, liegt der minimale Anteil an Wasser, im Vergleich zur Definition des allgemeinen Transfergemisches, weiter von der Kristallphase entfernt. So kann die Verarbeitung des Transfergemisches zu einer Formlösung im erfindungsgemässen Mischkneter in einer kurzen Prozesszeit realisiert werden und gleichzeitig das Risiko der Übertrocknung des Materials gesenkt werden.

In beiden Fällen der Formel ist das Transfergemisch aber zwei bis mehrere Minuten dauernde Verarbeitungszeit, während welcher das Produkt im Mischkneter homogenisiert und gegebenenfalls restliches Wasser verdampft wird, von einer form- bzw. spinnbaren Lösung entfernt.

Das Produkt und somit auch das Ausgangsmaterial beinhalten im Wesentlichen Zellulose, Wasser und ein Funktionsmedium. Daneben beinhaltet das Produkt weitere Chemikalien wie Stabilisatoren etc., auf deren Aufzählung im Einzelnen im Rahmen der Erfindung verzichtet werden kann, da sie dem Fachmann bekannt sind und für jeden einzelnen Fall der Anwendung Anpassungen bedürfen.

Dem Fachmann sind ferner Verfahren zur Herstellung einer Formlösung aus Zellstoff nach einem Löseverfahren bekannt, bei welchen die Funktionsmedien im Wesentlichen aus einem Protolyten bestehen wie beispielsweise insbesondere eine Phosphorsäure oder eine Natronlauge, und bei welchem typischerweise keine Verdampfung von Wasser stattfindet sondern das Lösen insbesondere zumindest teilweise um den oder unter dem Gefrierpunkt stattfinden muss und eine Formlösung durch eine Kombination von Mischen und Scheren während einer gewissen Verweilzeit entsteht. Auch diese Löseverfahren (auch Kaltverfahren genannt) zeichnen sich im Stand der Technik bei der Verwendung eines Hochscheraggregats durch eine limitierte Kapazität des Formlösungsstroms aus, nämlich bei der Verwendung eines Extruders wegen der für Extruder typischen, limitierten Verweilzeit, oder durch limitierte Kühlkapazität, nämlich bei der Verwendung eines kontinuierlichen Mischers, wegen deren infolge nicht beheizbaren bzw. nicht kühlbaren Wellen und Wellenscheiben limitierten Kühlflächen.

In einem Ausführungsbesispiel besteht das Hochscheraggregat aus mindestens zwei Grossvolumen-Hochscheraggregaten wie beispielsweise in Form von Z-Knetern, also aus einem ersten Z-Kneter und einem weiteren Z-Kneter, welche hintereineinander oder nebeneinander dem Mischkneter vorgeschalten sind. Die Z-Kneter haben den Vorteil, dass das Ausgangsmaterial unabhängig vom Mischkneter zum Transfergemisch verarbeitet und erst dann dem Mischkneter zugeführt wird, wenn dies gewünscht ist oder ein entsprechendes Zeitfenster vorhanden ist. Beim Einsatz mehrerer, nebeneinander angeordneter Z-Kneter kann beispielsweise beim Entladen des Transfergemisches aus dem ersten Z-Kneter in den Mischkneter der weitere Z-Kneter unabhängig davon aus dem Ausgangsmaterial ein Transfergemisch herstellen, und sobald der erste Z-Kneter entladen ist, kann der weitere Z-Kneter zum Entladen dem Mischkneter zugeführt werden. Dieser Vorgang kann alternatierend erfolgen.

Eine weitere Ausführungsform besteht darin, das Transfergemisch absatzweise in einem ersten Z-Kneter herzustellen, welcher über eine Austragsschnecke einen zweiten Z-Kneter absatzweise beschickt wird, dessen Fassungsvermögen so gewählt ist, dass dieser die infolge absatzweisen Austrags aus dem ersten Z-Kneter erfolgende Füllstandsschwankungen des zweiten Z-Kneters auffangen und den nachfolgenden Mischkneter kontinuierlich über eine Austragsschnecke beschicken kann. Anstelle des zweiten Z-Kneters ist auch ein mit einer Austragsschnecke ausgerüsteter Rührbehälter denkbar.

Der erfindungsgemässe Mischkneter und die damit verbundenen erfindungsgemässen Verfahren in dieser Erfindung betreffen Trockenlöseverfahren, welche sich unterscheiden nach einem Direktlöseverfahren ohne Verdampfung von Wasser, einem Direktlöseverfahren mit Verdampfung von Wasser und einem Protolyt-Löseverfahren.

Es kann auch vorgesehen sein, dass das Transfergemisch in einem vorgehenden Prozessorgan aus dem Ausgangsmaterial als eine Vormischung (auch Premix genannt) hergestellt wird und dieses Premix dann als verrührtes Ausgangsmaterial in den Hochscheraggregat gebracht wird.

Auch werden die Parameter des Hochscheraggregats derart gewählt, dass die Zusammensetzung des Transfergemisches und die Zusammensetzung des Ausgangsmaterials im Wesentlichen identisch sind.

Es kann weiterhin vorgesehen sein, dass die Kneterwelle des Mischkneters rotierend das Produkt über beheizte und/oder gekühlte Innenflächen des Mischkneters wischt. Auch kann weiterhin vorgesehen sein, dass Wellenaufbauten der Kneterwelle des Mischkneters zumindest teilweise wie beispielweise in Achsenabschnitten der Kneterwelle heizhohlraumfrei ausgeführt sind.

Weiter kann die Zusammensetzung des Transfergemischs mit der Zusammensetzung des Ausgangsmaterial identisch sein, und der Wassergehalt im Ausgangsmaterial so gewählt werden, dass im Mischkneter durch die Misch-Knet-Interaktion und durch beheizte Oberflächen soviel Wasser des Transfergemischs verdampft, dass durch die dabei entstehende Verdampfungskühlung eine Formlösung entsteht ohne das Produkt dabei wesentlich zu überhitzen.

Eine Verdampfungskühlung zwecks Vermeidung einer Überhitzung oder einer wesentlichen Überhitzung des Produkts kann zudem auch dadurch erreicht oder gesteigert werden, dass Wasser (im Rahmen dieser Erfindung auch Verdampfungskühlwasser genannt) direkt in den Mischkneter zugegeben wird. Dieses wird an der Oberfläche des Produkts auf seine Siedetemperatur erwärmt, sodass es unmittelbar verdampft, ohne wesentlich in das Produkt eingemischt zu werden und demzufolge ohne den Wassergehalt des Produkts wesentlich zu erhöhen. Dadurch wird dem Produkt Wärme entzogen und dieses somit gekühlt.

Die Energiezuführung oder Energieabführung der thermisch beheizbaren oder kühlbaren inneren Oberflächen, auch thermische Austauschflächen genannt, des Prozessraums erfolgt in der Regel über ein Heizmedium. Typische Heizmedien sind Wärmeträger wie Wasser, Dampf oder andere, meistens synthetische Flüssigkeiten, welche die thermischen Austauschflächen des Mischkneters und allenfalls eines zugehörigen Doms durchfliessen, oder in thermischen Austauschflächen eingebaute, mit elektrischem Strom durchflossene und sich dadurch erwärmende Spulen, um die prozessraumseitigen Oberflächen des Mischkneters energiezuführend zu heizen oder zu kühlen.

Verdampfungskühlwasser zeichnet sich dadurch aus, dass es dem Mischkneter direkt und über eine separate Zuführung zugegeben wird und nicht bereits im Ausgangsmaterial enthalten ist und nicht als Teil des Transfergemischs in den Mischkneter gelangt. Typischerweise erfolgt die Zuführung über ein regelbares Ventil, sodass die Wassermenge pro Zeiteinheit gezielt auf die zu erreichende Verdampfungskühlung abgestimmt wird. Die Temperatur des Verdampfungskühlwassers unmittelbar vor dem Eintritt in den Prozessraum des Mischkneters und der Gasdruck im Prozessraum des Mischkneters werden dabei so gewählt, dass sich die Temperatur des Verdampfungskühlwassers unterhalb des Siedepunkts von Wasser im Prozessraum des Mischkneters befindet, sodass möglichst wenig Wasser durch einen, dem Fachmann bekannten Flash verdampft, und möglichst viel Wasser die Oberfläche des Produkts erreicht.

Eine Verdampfungskühlung kann auch durch die Verdampfung einer anderen Flüssigkeit (auch Verdampfungskühlungsmedium) als Wasser erfolgen. Das Verdampfungskühlmedium kann zusammen mit dem Ausgangsmaterial dem Hochscheraggregat beigegeben werden oder anstelle des Verdampfungskühlwassers direkt dem Prozessraum des Mischkneters beigegeben werden. Verdampfungskühlung kann auch durch ein teilweises Verdampfen des Funktionsmediums erfolgen, wobei der verdampfende Anteil des Funktionsmediums auch als Verdampfungskühlungsmedium bezeichnet wird.

Eine Kühlung des Produkts zwecks Vermeidung einer Überhitzung oder wesentlichen Überhitzung des Produkts kann zudem auch durch das Wischen des Produkts über die zumindest teilweise gekühlten Innenflächen des Mischkneters erreicht oder gesteigert werden.

**Figurenbeschreibung**

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

Figur 1     schematisch eine Anlage mit einem Mischkneter 6 ohne Verdampfung;

Figur 2     schematisch eine Anlage mit dem Mischkneter 6 mit Verdampfung;

Figur 3     schematisch eine Anlage mit einem Hochdrehzahl-Hochscheraggregat 5 und dem Mischkneter 6;

Figur 4     schematisch eine Anlage mit zwei Grossvolumen-Hochscheraggregaten 8 und dem Mischkneter 6;

Figur 5     schematisch ein weiteres Ausführungsbeispiel einer erfindungsgemässen Anlage;

Figur 6     ein erstes Schaubild über die bevorzugten Materialeigenschaften eines Transfergemisches;

Figur 7     ein zweites Schaubild über die allgemeinen Materialeigenschaften des Transfergemisches.

**Ausführungsbeispiel**

Vorneweg wird darauf hingewiesen, dass Ausführungen und Merkmale einzelner Bauteile bei Erklärung für eine Figur, auch für die anderen Figuren gelten sollen. Insbesondere trifft dies zu, wenn für die gleichen Bauteile in verschiedenen Figuren die gleichen Bezugsziffern genutzt werden.

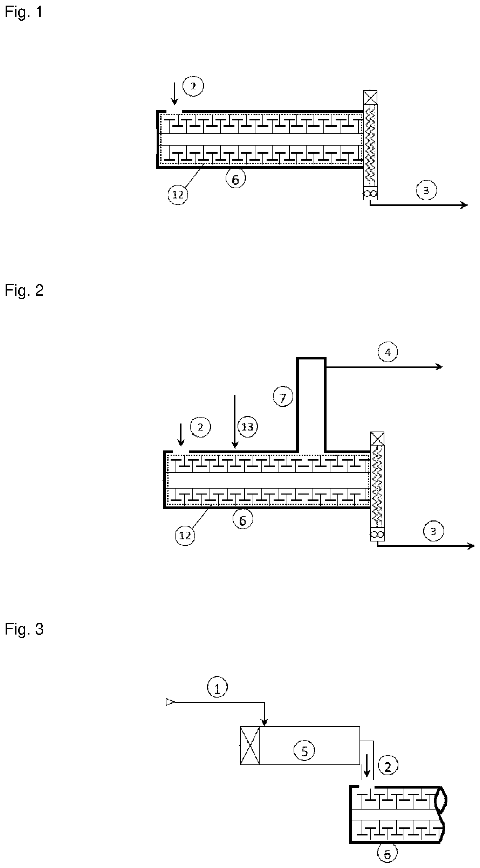

In der Figur 1 ist ein Mischkneter 6 gezeigt. Im Inneren des Mischkneters 6 befindet sich der Prozessraum 12. Der Prozessraum 12 wird einends durch einen kontinuierlichen Strom von Transfergemisch 2 beschickt und andernends verlässt eine Formlösung bzw. ein Formlösungsstrom 3 den Mischkneter 6. Bei dem hier gezeigten Ausführungsbeispiel wird der Mischkneter 6 ohne Verdampfung betrieben.

In der Figur 2 ist eine Anlage gezeigt, bei welcher der Mischkneter 6 mit Verdampfung betrieben wird. Dazu weist der Mischkneter 6 einends wieder den kontinuierlichen Strom von Transfergemisch 2 und andernends wieder die Formlösung bzw. den Formlösungsstorm 3 auf. Zusätzlich ist schematisch durch einen Pfeil die Zugabe von Verdampfungskühlwasser 13 gezeigt. Zusätzlich umfasst der Prozessraum 12 beziehungsweise der Mischkneter 6 einen Dom 7 auf. Von dem Dom 7 wiederum wegweisend ist schematisch ein zweiter Pfeil für einen Brüdenstrom 4 gezeigt.

In der Figur 3 ist der Mischkneter 6 teilweise dargestellt. Weiter ist zu erkennen, wie der kontinuierliche Strom von Transfergemisch 2 aus einem Hochdrehzahl-Hochscheraggregat 5 zu dem Mischkneter 6 geliefert wird. Weiter ist zu erkennen, wie schematisch mit einem dritter Pfeil eine kontinuierliche Zugabe der Komponenten eines Ausgangsmaterials 1 in das Hochdrehzahl-Hochscheraggregat 5 eingebracht wird.

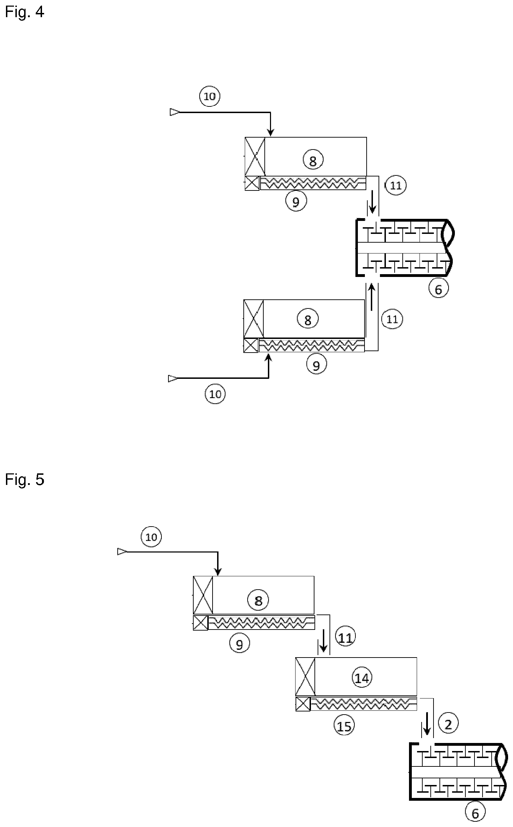

In der Figur 4 ist gezeigt, wie zwei nebeneinander angeordnete Grossvolumen-Hochscheraggregate 8 alternierend absatzweise betrieben werden und dabei jeweils einen absatzweisen Strom von Transfergemisch 11 in den Mischkneter 6 geben. Dazu weisen die Grossvolumen-Hochscheraggregate 8 wiederum jeweils ein absatzweise betriebenes Austragsorgan 9 auf. Zusätzlich ist zu erkennen, wie schematisch jeweils ein vierter Pfeil eine absatzweise Zugabe der Komponenten des Ausgangsmaterials 10 in die Grossvolumen-Hochscheraggregate 8 darstellt.

In der Figur 5 ist schematisch ein weiteres Ausführungsbeispiel einer erfindungsgemässen Anlage gezeigt. Dort ist zwischen dem Mischkneter 6 und dem Grossvolumen-Hochscheraggregat 8 ein zusätzliches Betriebsteil gezeigt. Bei diesem zusätzlichen Betriebsteil handelt es sich entweder um ein weiteres Grossvolumen-Hochscheraggregat oder einen gerührten Behälter 14. Dabei ist es also möglich entweder das weitere Grossvolumen-Hochscheraggregat oder den gerührten Behälter 14 vorzusehen. Wichtig bei der Auswahl ist das Erfordernis, dass das zusätzliche Betriebsteil ein kontinuierlich betriebenes Austragsorgan 15 aufweist und somit den kontinuierlichen Strom von Transfergemisch 2 in den Mischkneter 6 ermöglicht. Dabei weist das Grossvolumen-Hochscheraggregat 8 eine diskontinuierliche Beschickung des weiteren Grossvolumen-Hochscheraggreagts oder des gerührten Behälters 14 in Form des absatzweisen Stroms von Transfergemisch 11 auf. Wohingegen das weitere Grossvolumen-Hochscheraggregat oder der gerührte Behälter 14 den Mischkneter 6 mit einem kontinuierlichen Strom von Transfergemisch 2 beschickt. Bezüglich des Grossvolumen-Hochscheraggregats 8 gelten die Ausführungen zu einem der Grossvolumen-Hochscheraggregate 8 aus der Figur 4.

Kombinationen der Anlagen aus den Figuren 1 bis 5 sind im Rahmen der Erfindung als mitveröffentlicht anzusehen, wenn sich die Kombination nicht sowieso ausschliesst.

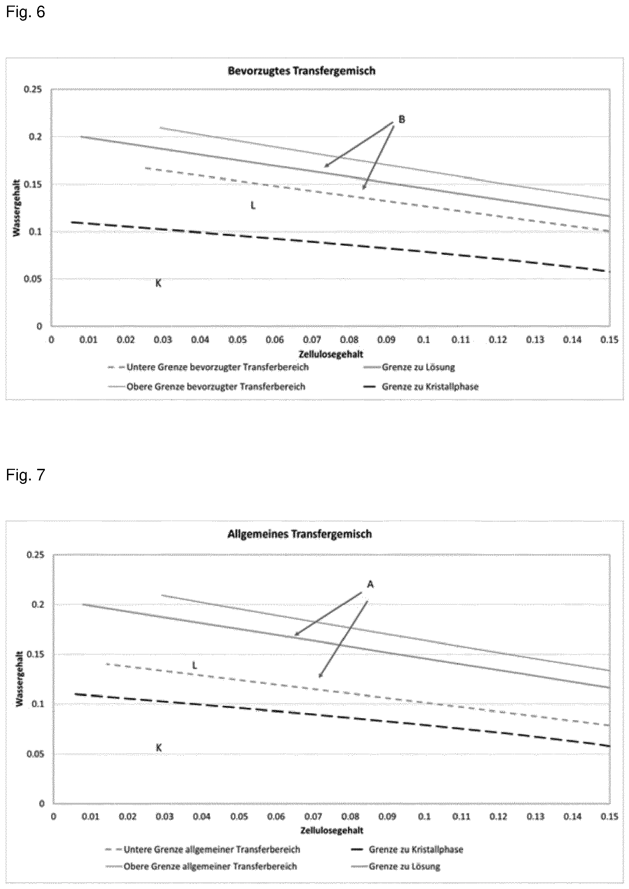

In den Figuren 6 und 7 sind die Gleichungen für den allgemeinen und bevorzugten Bereich eines NMMO-Transfergemischs grafisch dargestellt .

Dabei weist die allgemeine Zusammensetzung a folgende Parameter von

$$\text{maximal } x_{H2O} = 0{,}2864 \, x^2_{Cell} - 0{,}6786 \, x_{Cell} + 0{,}2288$$

$$\text{minimal } x_{H2O} = -0{,}4525 \, x_{Cell} + 0{,}1465$$

auf und zeigt damit einen grösseren Spielraum als die bevorzugte Zusammensetzung b, welche folgende Parameter von

$$\text{maximal } x_{H2O} = 0{,}2864 \, x^2_{Cell} - 0{,}6786 \, x_{Cell} + 0{,}2288$$

$$\text{minimal } x_{H2O} = -0{,}00022 \, x^2_{Cell} - 0{,}5317 \, x_{Cell} + 0{,}1800$$

aufweist.

Bei abnehmendem Wassergehalt wird zunächst der Bereich der Lösung L erreicht und bei weiterer Abnahme des Wassergehalts erfolgt die Kristallisation K des NMMOs.

Die Anwendung der Gleichungen für den allgemeinen und bevorzugten Bereich eines NMMO-Transfergemischs zeigt im Folgenden das Beispiel für die Herstellung einer Formlösung mit einem Zellulosegehalt von 12 wt% mit Hilfe des Direktlöseverfahrens mit NMMO als Funktionsbeispiel und ohne signifikante Verdampfung von Wasser während des Prozesses.

Alle nachfolgenden Anteilsangaben beziehen sich auf die Gesamtmasse des Zellulose-NMMO-Wasser-Gemisches. Ein Ausgangsmaterial mit einem Zelluloseanteil von ca. 12.0 wt% wird aus Zellulose und NMMO-Monohydrat hergestellt, sodass sich ein NMMO-Anteil von ca. 77.4 wt% ergibt.

Dieses Ausgangsmaterial wird mit einem Strom von ca. 217 kg/h in ein Hochscheraggregat eingebracht und dort zu einem Transfergemisch verarbeitet. Das Hochscheraggregat wird im Beispiel bei atmosphärischem Druck betrieben.

Die Heiztemperatur des Hochscheraggregats beträgt im vorliegenden Beispiel 90°C, sodass eine Überhitzung des Produktes vermieden wird. Der Transfer des Gemisches erfolgt nach thermo-mechanischer Behandlung im Hochscheraggregat bei einer Produkttemperatur von ca. 105°C.

Das Verhältnis von Wasser und NMMO ist im Vergleich zum Beginn des Prozesses konstant geblieben. Das durch das Hochscheraggregat bereitgestellte Transfergemisch wird nachfolgend mit einem Strom von ca. 217 kg/h in den Mischkneter verbracht.

Dort erfolgt das vollständige Lösen der Zellulose sowie eine Homogenisierung des Gemisches durch Knet- und Mischwirkung, sodass eine vollständige Formlösung entsteht. Die Verweilzeit des Gemisches im Mischkneter beträgt 8,5 Minuten.

Das Prozessvolumen des Kneters beträgt folglich ca. 70 L. Die Formlösung verlässt den Mischkneter mit einem Strom von ca. 217 kg/h mit einem Zelluloseanteil von 12.0 wt%, einem NMMO-Anteil von ca. 77,4 wt% und einer Temperatur von ca. 107 °C.

**Bezugszeichenliste**

| 1 | Kontiniuerliche Zugabe der Komponenten des Ausgangsmaterials | | |
|---|---|---|---|
| 2 | Kontinuierlicher Strom von Transfergemisch | | |
| 3 | Formlösung bzw. Formlösungstrom | | |
| 4 | Brüdenstrom | | |
| 5 | Hochdrehzahl-Hochscheraggregat | A | Allgem. Zusammensetzung des Transfergemisches |
| 6 | Mischkneter | B | Bevorzugte Zusammensetzung des Transfergemisches |
| 7 | Dom | K | Kristallisation |
| 8 | Grossvolumen-Hochscheraggregat | L | Lösung |
| 9 | Absatzweise betriebenes Austragsorgan | | |
| 10 | Absatzweise Zugabe der Komponenten des Ausgangsmaterials | | |
| 11 | Absatzweiser Strom von Transfergemisch | | |
| 12 | Prozessraum | | |
| 13 | Verdampfungskühlwasser | | |
| 14 | Grossvolumen-Hochscheraggregat oder gerührter Behälter | | |
| 15 | Kontinuierlich betriebenes Austragsorgan | | |

## Patentansprüche

**1.** Verfahren zur Herstellung einer Formlösung aus einem Ausgangsmaterial aus Zellulose, Wasser und einem Funktionsmedium nach dem Trockenlöseverfahren, wobei das Ausgangsmaterial zunächst einem Hochscheraggregat (5, 8) zugeführt wird,
**dadurch gekennzeichnet,**
**dass** in dem Hochscheraggregat (5, 8) aus dem Ausgangsmaterial ein Transfergemisch (A, B) entsteht und das Transfergemisch (A, B) anschliessend einem Mischkneter (6) zum Lösen zugeführt wird.

**2.** Verfahren nach Anspruch 1, **dadurch gekennzeichnet, dass** die Zusammensetzung des Ausgangsmaterials und die Zusammensetzung des Transfergemischs (A, B) im Wesentlichen identisch sind.

**3.** Verfahren nach einem der vorigen Ansprüche, **dadurch gekennzeichnet, dass** eine Maschinensteuerung den Anteil von Wasser, Zellulose und Funktionsmedium in der Zusammensetzung des Produkts vom Ausgangsmaterial bis zur Formlösung, die Produkttemperatur, die Viskosität des Produkts, den Druck oder die Temperatur des Heizmediums, den Druck im Prozessraum (12), die Rotationsgeschwindigkeit oder das Drehmoment einer Kneterwelle über Sensoren überwacht und steuert oder regelt.

**4.** Verfahren nach einem der vorigen Ansprüche, **dadurch gekennzeichnet, dass** mindestens ein Teil einer Innenfläche des Mischkneters (6) beheizt und/oder gekühlt wird.

**5.** Verfahren nach einem der vorgehenden Ansprüche, **dadurch gekennzeichnet, dass** der Wasseranteil im Transfergemisch (A, B) grösser ist als in der Formlösung und im Mischkneter (6) Wasser verdampft wird.

**6.** Verfahren nach Anspruch 5, **dadurch gekennzeichnet, dass** die für die Verdampfung des Wassers notwendige Energie im Wesentlichen bis ausschliesslich über Dissipation infolge der Interaktion der sich durch die Rotation der Kneterwelle kämmenden Knetelemente mit dem Produkt erfolgt.

7. Verfahren nach Anspruch 5, **dadurch gekennzeichnet, dass** die für die Verdampfung des Wassers notwendige Energie im Wesentlichen bis ausschliesslich über Dissipation infolge der Interaktion der sich durch die Rotation der Kneterwelle kämmenden Knetelemente mit dem Produkt und durch beheizte thermische Austauschflächen erfolgt.

8. Verfahren nach einem der Ansprüche 5 bis 7, **dadurch gekennzeichnet, dass** die Wellenaufbauten der Kneterwelle zumindest teilweise heizhohlraumfrei ausgestaltet sind.

9. Verfahren nach einem der Ansprüche 5 bis 8, **dadurch gekennzeichnet, dass** die durch die Verdampfung von Wasser an der Produktoberfläche entstehende Verdampfungskühlung zur Kühlung des Produkts Energie abführt.

10. Verfahren nach einem der vorigen Ansprüche, **dadurch gekennzeichnet, dass** ein Verdampfungskühlwasser (13) dem Mischkneter (6) zugegeben wird und die durch die Verdampfung von dem Verdampfungskühlwasser (13) an der Produktoberfläche entstehende Verdampfungskühlung zur Kühlung des Produkts Energie abführt.

11. Verfahren nach einem der Ansprüche 5 bis 10 **dadurch gekennzeichnet, dass** zwecks Verdampfungskühlung anstatt des Wassers oder zusätzlich zum Wasser ein Verdampfungskühlmedium verdampft wird, das entweder zusammen mit dem Ausgangsmaterial dem Hochscheraggregat (5, 8) zugeführt wird oder anstelle des Verdampfungskühlwassers (13) direkt in den Prozessraum (12) des Mischkneters (6) zugegeben wird.

12. Verfahren nach einem der vorigen Ansprüche, **dadurch gekennzeichnet, dass** gekühlte thermische Austauschflächen zur Kühlung des Produkts Energie abführen.

13. Anlage zur Herstellung einer Formlösung aus einem Ausgangsmaterial aus Zellulose, Wasser und einem Funktionsmedium nach dem Trockenlöseverfahren, bestehend aus einem Mischkneter (6) und einem Hochscheraggregat (5, 8), **dadurch gekennzeichnet, dass** das Hochscheraggregat (5, 8) dem Mischkneter (6) direkt oder indirekt vorgeschaltet ist.

14. Anlage nach Anspruch 13, **dadurch gekennzeichnet, dass** das Prozessvolumen des Mischkneters (6) auf eine Kapazität ausgelegt ist, die ausschliesslich der Formlösungsstromkapazität entspricht.

15. Anlage nach Anspruch 13 oder 14, **dadurch gekennzeichnet, dass** das Hochscheraggregat (5, 8) aus einem ersten Grossvolumen-Hochscheraggregat (8) und einem weiteren Grossvolumen-Hochscheraggregat (8) besteht, welche hintereinander oder nebeneinander angeordnet dem Mischkneter (6) vorgeschaltet sind.

16. Anlage nach einem der Ansprüche 13 und 14, **dadurch gekennzeichnet, dass** das Hochscheraggregat als kontinuierlich betriebenes Hochdrehzahl-Hochscheraggregat (5) ausgestaltet ist.

Fig. 1

Fig. 2

Fig. 3

Fig. 4

Fig. 5

Fig. 6

Fig. 7

Europäisches
Patentamt

European
Patent Office

Office européen
des brevets

**EUROPÄISCHER RECHERCHENBERICHT**

Nummer der Anmeldung

EP 22 15 4311

| | EINSCHLÄGIGE DOKUMENTE | | | |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (IPC) |
| X | DE 10 2019 116736 A1 (LIST TECH AG [CH]) 24. Dezember 2020 (2020-12-24) | | 1-9, 12-16 | INV. C08B1/00 |
| A | * Absatz [0006] - Absatz [0007]; Abbildung 1 * | | 10,11 | C08L1/02 C08J3/09 D01D1/02 |
| | ----- | | | D01F2/00 |
| X | DE 198 37 210 C1 (ALCERU SCHWARZA GMBH [DE]) 11. November 1999 (1999-11-11) | | 1-9, 12-14,16 | B01F21/00 |
| A | * Spalte 3, Zeile 45 - Spalte 4, Zeile 24; Abbildung 1 * | | 10,11,15 | B01F27/00 |
| | ----- | | | |
| X | DIENER A ET AL: "CONTINUOUS DISSOLUTION PROCESS OF CELLULOSE IN NMMO", CHEMICAL FIBERS INTERNATIONAL,, Bd. 49, Nr. 1, 1. März 1999 (1999-03-01), Seiten 40-42, XP000827372, ISSN: 0340-3343 | | 1-9, 12-14,16 | |
| A | * Seite 40 - Seite 42; Abbildung 6 * | | 10,11,15 | |
| | ----- | | | |
| X | US 5 534 113 A (QUIGLEY MICHAEL C [GB] ET AL) 9. Juli 1996 (1996-07-09) | | 1-9, 12-14,16 | |
| A | * Spalte 4, Zeile 1 - Zeile 48; Abbildung 1 * | | 10,11,15 | RECHERCHIERTE SACHGEBIETE (IPC) |
| | ----- | | | C08B C08L C08J D01D D01F B01F |

Der vorliegende Recherchenbericht wurde für alle Patentansprüche erstellt

| Recherchenort | Abschlußdatum der Recherche | Prüfer |
|---|---|---|
| München | 21. Juni 2022 | Arz, Marius |

## ANHANG ZUM EUROPÄISCHEN RECHERCHENBERICHT
## ÜBER DIE EUROPÄISCHE PATENTANMELDUNG NR.

**EP 22 15 4311**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**21-06-2022**

| Im Recherchenbericht angeführtes Patentdokument | Datum der Veröffentlichung | Mitglied(er) der Patentfamilie | Datum der Veröffentlichung |
|---|---|---|---|
| DE 102019116736 A1 | 24-12-2020 | BR 112021025681 A2 | 03-03-2022 |
| | | CA 3144104 A1 | 24-12-2020 |
| | | CN 114174571 A | 11-03-2022 |
| | | DE 102019116736 A1 | 24-12-2020 |
| | | EP 3987088 A1 | 27-04-2022 |
| | | KR 20220024772 A | 03-03-2022 |
| | | WO 2020254232 A1 | 24-12-2020 |
| DE 19837210 C1 | 11-11-1999 | AT 250632 T | 15-10-2003 |
| | | BR 9913080 A | 25-09-2001 |
| | | CA 2340778 A1 | 24-02-2000 |
| | | CN 1312819 A | 12-09-2001 |
| | | DE 19837210 C1 | 11-11-1999 |
| | | EP 1144455 A1 | 17-10-2001 |
| | | ES 2205894 T3 | 01-05-2004 |
| | | ID 29620 A | 06-09-2001 |
| | | KR 20010072706 A | 31-07-2001 |
| | | MY 119598 A | 30-06-2005 |
| | | TR 200100376 T2 | 23-07-2001 |
| | | TW 426759 B | 21-03-2001 |
| | | US 6610134 B1 | 26-08-2003 |
| | | WO 0009563 A1 | 24-02-2000 |
| US 5534113 A | 09-07-1996 | AT 149858 T | 15-03-1997 |
| | | AU 673540 B2 | 14-11-1996 |
| | | BR 9307031 A | 29-06-1999 |
| | | CA 2142620 A1 | 31-03-1994 |
| | | CZ 287562 B6 | 13-12-2000 |
| | | DE 660743 T1 | 15-02-1996 |
| | | DE 69308862 T2 | 07-08-1997 |
| | | EP 0660743 A1 | 05-07-1995 |
| | | ES 2100567 T3 | 16-06-1997 |
| | | FI 951245 A | 16-03-1995 |
| | | GR 3023236 T3 | 30-07-1997 |
| | | HK 1004537 A1 | 27-11-1998 |
| | | HU 217765 B | 28-04-2000 |
| | | IN 188033 B | 10-08-2002 |
| | | JP 3531746 B2 | 31-05-2004 |
| | | JP H08504223 A | 07-05-1996 |
| | | KR 950702856 A | 23-08-1995 |
| | | PL 308138 A1 | 24-07-1995 |
| | | RU 2104078 C1 | 10-02-1998 |
| | | SG 46429 A1 | 20-02-1998 |
| | | SK 35995 A3 | 07-02-1996 |
| | | TW 246677 B | 01-05-1995 |
| | | US 5534113 A | 09-07-1996 |

Für nähere Einzelheiten zu diesem Anhang : siehe Amtsblatt des Europäischen Patentamts, Nr.12/82

EPO FORM P0461

**Seite 1 von 2**

**ANHANG ZUM EUROPÄISCHEN RECHERCHENBERICHT
ÜBER DIE EUROPÄISCHE PATENTANMELDUNG NR.**

**EP 22 15 4311**

**21-06-2022**

| Im Recherchenbericht angeführtes Patentdokument | Datum der Veröffentlichung | Mitglied(er) der Patentfamilie | Datum der Veröffentlichung |
|---|---|---|---|
| | | WO      9406530 A1 | 31-03-1994 |

**Seite 2 von 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0906455 A1
- EP 1191038 A1
- EP 1144455 B1
- WO 2005000945 A1
- WO 2006071101 A1
- CH 674472 A5
- DE 4118884 A1
- WO 1994006530 A1

- JP 6055267 B
- DE 1058188 A1
- DE 3720325 A1
- CA 3020820 A1
- WO 9606207 A1
- WO 9606208 A1
- US 4196282 A